# EUROPÄISCHE PATENTSCHRIFT

(11) **EP 0 993 750 B1**
(45) Veröffentlichungstag und Bekanntmachung des Hinweises auf die Patenterteilung: **05.11.2003**
(21) Anmeldenummer: 98936110.0
(22) Anmeldetag: 05.06.1998
(51) Int. Cl.: H04Q 7/34

(54) **BETRIEBS- UND WARTUNGSSYSTEM FÜR EIN MOBILFUNKNETZ**
OPERATION AND MAINTENANCE SYSTEM FOR A MOBILE TELECOMMUNICATIONS NETWORK
SYSTEME DE FONCTIONNEMENT ET DE MAINTENANCE POUR RESEAU RADIO-MOBILE

(30) Priorität: 02.07.1997 DE 19728193
(43) Veröffentlichungstag der Anmeldung: 19.04.2000
(73) Patentinhaber: SIEMENS AKTIENGESELLSCHAFT, 80333 München (DE)
(72) Erfinder: HIRSCH, Lucian, D-81373 München (DE)
(86) Internationale Anmeldenummer: DE9801549
(87) Internationale Veröffentlichungsnummer: WO99001993

(56) Entgegenhaltungen:
- EP-A- 0 442 839
- EP-A- 0 737 907
- WO-A-96/30823
- US-A- 5 402 491
- JOHNSON J T: "SIGN ON AND BE SAFE IBM'S NETWORK SECURITY PROGRAM (NETSP)" DATA COMMUNICATIONS, Bd. 24, Nr. 1, 1. Januar 1995, Seite 122, 124 XP000480828
- SCHMID E H ET AL: "GSM OPERATION AND MAINTENANCE" ELECTRICAL COMMUNICATION,1. Januar 1993, Seiten 164-171, XP000368135

## Beschreibung

Die Erfindung betrifft ein Betriebs- und Wartungssystem für ein Mobilfunknetz nach dem Oberbegriff des Anspruches 1.

Ein Mobilfunknetz ist ein hierarchisch gegliedertes System verschiedener Netzelemente, bei dem die unterste Hierarchiestufe von den Mobiltelefonen gebildet wird, die nach dem englischsprachigen Ausdruck 'Mobile Station' auch mit MS bezeichnet werden. Diese Mobiltelefone kommunizieren über eine sogenannte Um-Schnittstelle oder Funkschnittstelle mit die nächste Hierarchieebene bildenden Funkbasisstationen, die auch als Basisstation bzw. nach dem englischsprachigen Ausdruck 'Base Transceiver Station Equipment' mit BTSE bezeichnet werden.

Aufgrund der relativ geringen Funkreichweite solcher Basisstationen enthält ein Mobilfunknetz üblicher Größe eine sehr große Zahl von Basisstationen. Zur Lenkung und Kontrolle des Datenverkehrs zwischen den Basisstationen sind diese gebietsweise zusammengefaßt. Die hierzu vorgesehenen übergeordneten Netzelemente werden mit Basisstationssteuerung oder gemäß dem englischsprachigen Ausdruck 'Base Station Controller' mit BSC bezeichnet. Die Basisstationen kommunizieren über eine sogenannte Abis-Schnittstelle mit den Basisstationssteuerungen. Einer Basisstationssteuerung kann gegebenenfalls zur Optimierung der Datenkommunikation eine Transcodier- und Ratenanpaßeinheit zugeordnet sein, die nach dem englischsprachigen Ausdruck 'Transcoder and Rate Adapter Unit' auch mit TRAU bezeichnet wird. Die Basisstationen, die Basisstationssteuerungen und die Transcodier- und Ratenanpaßeinheiten bilden ein Basisstationssubsystem des Mobilfunknetzes, das nach dem englischsprachigen Ausdruck 'Base Station Subsystem' auch mit BSS bezeichnet wird. Basisstationen, Basisstationssteuerungen und Transcodier- und Ratenanpaßeinheiten sind hierbei Netzeinrichtungen des Basisstationssubsystems.

Die Basisstationssteuerungen kommunizieren über sogenannte A-Schnittstellen mit einer oder einigen wenigen Mobilvermittlungseinrichtungen, die nach dem englischsprachigen Ausdruck 'Mobile Switching Centers' auch mit MSC bezeichnet werden und über die u.a. auch der Übergang in andere Telefonnetze erfolgt. Die Mobilvermittlungseinrichtungen bilden gemeinsam mit einigen Datenbanken das Vermittlungssubsystem, das nach dem englischsprachigen Ausdruck 'Network Switching Subsystem' auch mit NSS bezeichnet wird.

Neben den bisher beschriebenen Netzelementhierarchien steht ein Betriebs- und Wartungssystem, das gemäß dem englischsprachigen Ausdruck 'Operation and Maintenance Subsystem' auch mit OMS bezeichnet wird. Das Betriebs- und Wartungssystem dient zum Konfigurieren und Überwachen aller Netzelemente. Überwachungsmaßnahmen und Konfigurierungsmaßnahmen werden hierzu meist von Betriebs- und Wartungszentren aus ferngesteuert, die gemäß dem englischsprachigen Ausdruck 'Operation and Maintenance Centers auch mit OMC bezeichnet werden und sich üblicherweise im Bereich von Mobilvermittlungseinrichtungen befinden.

Eine Aufgabe des Betriebs- und Wartungssystems ist die Durchführung eines Konfigurationsmanagements, das nach dem englischsprachigen Ausdruck 'Configuration Management' auch mit CM bezeichnet wird und einen von fünf Managementfunktionsbereichen dargestellt, die die Telekommunikationsmanagementnetz-Prinzipien identifizieren. Das Konfigurationsmanagement definiert eine Reihe von Diensten, die eine Änderung der Struktur und damit des Verhaltens eines Telekommunikationsnetzes durch den Bediener ermöglichen. Diese Dienste beziehen sich immer auf Instanzen von gemanagten Objekten, die insgesamt die netzspezifische Managementinformationsbasis MIB bilden.

Grundsätzlich kann das Konfigurationsmanagement eines Mobilfunknetzes von zwei Seiten erfolgen, nämlich entweder zentral von einer Workstation eines Betriebs- und Wartungszentrums, die auch als Betriebs- und Wartungseinrichtung bzw. gemäß dem englischsprachigen Ausdruck 'Operation and Maintenance Terminal' mit OMT bezeichnet wird, oder im Bereich der Netzperipherie, mit Hilfe einer Wartungseinrichtung, die aufgrund des englischsprachigen Ausdrucks 'Local Maintenance Terminal' auch mit LMT bezeichnet wird und die über eine sogenannte T-Schnittstelle an irgendwelche Netzeinrichtungen des Basisstationssubsystems, also an eine Basisstation, eine Basisstationssteuerung oder eine Transcodier- und Ratenanpaßeinheit angeschlossen werden kann. Hierbei können mehrere LMT-Wartungseinrichtungen gleichzeitig an verschiedene Netzeinrichtungen angeschlossen sein. An Netzeinrichtungen angeschlossene LMT-Wartungseinrichtungen werden hierbei zum Ändern funktionsbezogener Instanzen gemanagter Objekte in zwei unterschiedlichen Betriebsarten betrieben. Wenn eine LMT-Wartungseinrichtung unmittelbar an einer Basisstation, Basisstationssteuerung oder Transcodier- und Ratenanpaßeinheit angeschlossen ist, arbeitet die LMT-Wartungseinrichtung im Normalmodus, in dem sie unmittelbar auf die entsprechende Netzeinrichtung einwirkt. Ist die LMT-Wartungseinrichtung an eine Basisstation oder eine Transcodier- und Ratenanpaßeinheit angeschlossen, so wird sie im Basisstationssteuerungsfernsteuermodus betrieben und wirkt von Ferne auf die zugehörige Basisstationssteuerung ein. Bei diesen beiden Konfigurationsarten ist die LMT-Wartungseinrichtung logisch an der Basisstationssteuerung angeschlossen.

Ein gemanagtes Objekt im Sinne des Konfigurationsmanagements ist eine logische Abstraktion einer Ressource im Mobilfunknetz. Hierbei wird unterschieden zwischen hardwarebezogenen gemanagten Objekten, die eine herstellerspezifische Realisierung einer Funktion beschreiben und zwischen funktionsbezogenen gemanagten Objekten, bei denen es sich jeweils um die Abstraktion einer herstellerunabhängigen Funktionalität handelt.

Hardwarebezogene gemanagte Objekte können über eine im Normalmodus, d.h. im Lokalmodus betriebene, an eine betroffene Basisstation oder Transcodier- und Ratenanpaßeinheit angeschlossene LMT-Wartungseinrichtung konfiguriert werden.

Im Rahmen des Konfigurationsmanagements können mehrere, unabhängig voneinander arbeitende Bediener von Betriebs- und Wartungseinrichtungen des Betriebs- und Wartungszentrums und Bediener von peripher angeschlossenen LMT-Wartungseinrichtungen gleichzeitig die Konfiguration eines Mobilfunknetzes in Form von Konfigurierungsvorgängen verändern. Ein Konfigurierungsvorgang wird hierbei üblicherweise mit einem Kommando 'Start Configuration' eröffnet, das von einer Betriebs- und Wartungseinrichtung oder einer LMT-Wartungseinrichtung abgegeben wird und im Normalfall wird ein solcher Konfigurierungsvorgang mit einem Kommando 'End Configuration' geschlossen, wobei alle Konfigurationsänderungen übernommen werden. Ein geöffneter Konfigurierungsvorgang kann auch mit einem Kommando 'Abort Configuration' abgebrochen werden, wobei vorgenommene Konfigurationsänderungen verworfen werden.

Das Betriebs- und Wartungszentrum regelt die Kontrolle von Bedienerzugriffen über das Betriebs- und Wartungszentrum auf das Mobilfunknetz mit Hilfe von Sicherheitsmechanismen, die in zentralen Überwachungsrechnern auf der Grundlage sogenannter Authentikations- und Autorisationsüberprüfungen, also von Benutzeridentifizierung und Zuweisung von Berichtigungen, implementiert werden. Demnach ist eine Kontrolle von Benutzerzugriffen über ein Betriebs- und Wartungszentrum sichergestellt. LMT-Zugriffe, also Konfigurationszugriffe über lokale Wartungseinrichtungen, die an irgendeine Netzeinrichtung des Basisstationssubsystems angeschlossen sind, ermöglichen einem Bediener dieselben Konfigurationsmöglichkeiten, wie Zugriffe über das Betriebs- und Wartungszentrum. Für einen Zugriff über eine solche LMT auf das Betriebs- und Wartungssystem eines Mobilfunknetzes wird häufig lediglich innerhalb dieses LMT eine Bedieneridentifizierung und eine Berechtigungsprüfung ausgeführt. Dies führt dazu, daß ein Bediener, der ein LMT-lokales Paßwort kennt, das gesamte Mobilfunknetz manipulieren kann.

Aus der WO 96/30823 sind ein Funk-Kommunikationssystem sowie mehrere jeweils selbständig arbeitende Rechnersysteme bekannt, die in einem Rechnernetz miteinander verbunden sind. Über dieses Rechnernetz ist das autonome Rechnersystem an eine zentrale Funk-Datenbasis angeschlossen. Jedes Rechnersystem ist ausschließlich für den Betrieb eines Teils des FunkKommunikationssystems verantwortlich und speichert Konfigurationsdaten in einer lokalen Rechner-Datenbasis als Abbild der zentralen Funk-Datenbasis. Dabei muss eine Synchronisierung der Daten zwischen der zentralen Rechner-Datenbasis und der Funk-Datenbasis laufend erfolgen. Die EP 0 442 839 offenbart ebenfalls mehrere selbständig arbeitende Rechnersysteme, die in einem Rechnernetz miteinander verbunden sind. Es behandelt also kein Kommunikationsnetz und kein Betriebs- und Wartungssystem, sondern ein Rechnernetz mit einer Zugriffskontrolle auf Ressourcen dieses Netzes. Jedesmal, wenn ein Zugriff erfolgt, fordert ein Ressourcen-Manager die zur Authentifikation erforderlichen Daten von einem lokalen Referenzüberwacher (reference monitor service) an. Nach dem Empfang dieser Daten überprüft der Ressourcen-Manager, ob entsprechende Zugriffsrechte auf die Ressource bestehen. In dem Aufsatz "Sign and be safe", Johnson J.T., Data Communications 24 (1995), January, No.1, New York, Seiten 122 und 124 ist ein Netz-Sicherheitsprogramm offenbart, das die Sicherheit in Rechnernetzen und Datenverarbeitungssystemen durch Kombination von Paßwort mit Benutzer-Authentifikation erhöht.

Aufgabe der Erfindung ist es, ein Betriebs- und Wartungssystem anzugeben, das eine bessere Kontrolle von Bedienerzugriffen über peripher angeschlossene Wartungseinrichtungen ermöglicht.

Diese Aufgabe löst die Erfindung durch ein Betriebs- und Wartungssystem mit den Merkmalen des Anspruches 1.

Ein erfindungsgemäßes Betriebs- und Wartungssystem enthält eine im Betriebs- und Wartungszentrum gespeicherte LMT-Zugriffstabelle, die für jeden zum Zugriff auf das Betriebsund Wartungssystem mit Hilfe einer LMT-Wartungseinrichtung berechtigten Bediener einen Bedienerdatensatz mit Namensangabe enthält, ein von ihm zum Zugriff über eine LMT-Wartungseinrichtung zu benutzendes, spezifisches Bedienerpasswort und Information über den Umfang seiner Zugriffsberechtigung. Außerdem enthält ein solches Betriebs- und Wartungssystem eine Steuerung im Betriebs- und Wartungszentrum zum Verwalten der LMT-Zugriffstabelle und zum Veranlassen des nichtflüchtigen Speicherns jeweils mindestens des Teiles der LMT-Zugriffstabelle in Netzeinrichtungen des Basisstationssubsystems, der für einen Zugriff mit Hilfe einer LMT-Wartungseinrichtung über diese Netzeinrichtungen erforderlich ist.

Durch ein solches Betriebs- und Wartungssystem ist sichergestellt, daß die Verwaltung der für LMT-Zugriffe relevanten Daten für das gesamte Mobilfunknetz zentral im Betriebs- und Wartungszentrum erfolgt. Trotzdem ist die Überprüfung sicherheitsrelevanter Daten bei einem Zugriff über eine LMT-Wartungseinrichtung schnell vor Ort, nämlich in der Netzeinrichtung, über die ein Zugriff erfolgen soll, oder in der für diese Netzeinrichtung zuständigen Basisstationssteuerung möglich, da in jeder Netzeinrichtung für jeden berechtigten Bediener ein Bedienerdatensatz mit Namensangabe vorliegt, der eine Paßwortkontrolle des Bedieners ermöglicht und außerdem eine Information über den Umfang der Zugriffsberechtigung dieses Bedieners enthält.

Eine günstige Weiterbildung eines erfindungsgemäßen Betriebsund Wartungssystems sieht vor, daß die im Betriebs- und Wartungszentrum verwaltete und gespeicherte LMT-Zugriffstabelle aus mehreren Tabellenteilen besteht, nämlich einem BSC-Tabellenteil mit Bedienerdatensätzen für LMT-Zugriffe über Basisstationssteuerungen, aus einem BTSE-Tabellenteil mit Bedienerdatensätzen für LMT-Zugriffe über Basisstationen und aus einem TRAU-Tabellenteil mit Bedienerdatensätzen für LMT-Zugriffe über Transcodier- und Ratenanpaßeinrichtungen. Demnach liegt für jeden Bediener, abhängig von seinen Zugriffsberechtigungen ein Bedienerdatensatz in den entsprechenden Tabellenteilen vor. Ein Bediener, der berechtigt ist, sowohl über Basisstationen, als auch über Basisstationssteuerungen und über Transcodier- und Ratenanpaßeinrichtungen mit Hilfe einer LMT-Wartungseinrichtung auf das Mobilfunknetz zuzugreifen, hat folglich einen BSC-Tabellenteil-Datensatz, einen BTSE-Tabellenteil-Datensatz und einen TRAU-Tabellenteil-Datensatz.

Eine Aufteilung der LMT-Zugriffstabelle im Betriebs- und Wartungszentrum vereinfacht es, an einzelne Netzeinrichtungen jeweils nur die für Zugriffe über diese Netzeinrichtung benötigten Bedienerdatensätze zu übertragen und in diese Netzeinrichtungen zu speichern. Dadurch wird in einer Weiterbildung der Erfindung ermöglicht, daß die Steuerung des Betriebs- und Wartungszentrums das nichtflüchtige Speichern des BSC-Tabellenteils der LMT-Zugriffstabelle in Basisstationssteuerungen des Basisstationssubsystems veranlaßt und außerdem das nichtflüchtige Speichern des BTSE-Tabellenteils der LMT-Zugriffstabelle in Basisstationen und das nichtflüchtige Speichern des TRAU-Tabellenteils der LMT-Zugriffstabelle in Transcodier- und Ratenanpaßeinrichtungen.

In einer Weiterbildung dieses Aspektes der Erfindung veranlaßt die Steuerung im Betriebs- und Wartungszentrum außerdem das nichtflüchtige Speichern des BTSE-Tabellenteils und des TRAU-Tabellenteils der LMT-Zugriffstabelle in Basisstationssteuerungen des Basisstationssubsystems.

Das Speichern des TRAU-Tabellenteils und des BTSE-Tabellenteils in einer Basisstationssteuerung ermöglicht bedarfsweise ein lokales Aktualisieren des LMT-Zugriffstabellenteileintrags in einer Transcodier- und Dateneinrichtung bzw. einer Basisstation, unabhängig von der momentanen Verfügbarkeit des Betriebs- und Wartungszentrum. Außerdem genügt es in einer Abwandlung eines erfindungsgemäßen Verfahrens, daß die Steuerung des Betriebs- und Wartungszentrums das nichtflüchtige Speichern aller Tabellenteile der LMT-Zugriffstabelle in den Basisstationssteuerungen veranlaßt, wenn zusätzlich die Basisstationssteuerungen dann das Speichern der spezifischen Tabellenteile in den an ihr angeschlossenen Netzeinrichtungen veranlaßt.

Eine günstige Ausgestaltungsform eines erfindungsgemäßen Betriebs- und Wartungssystems sieht vor, daß das Bedienerpasswort jeweils verschlüsselt in der LMT-Zugriffstabelle gespeichert ist.

Dadurch wird das Ausspähen eines Bedienerpasswortes durch einen Nichtberechtigten erschwert.

In einer Weiterbildung dieses Aspektes eines erfindungsgemäßen Betriebs- und Wartungssystems enthält eine Netzeinrichtung, über die ein Zugriff mit Hilfe einer LMT-Wartungseinrichtung möglich ist, eine Steuerung zum Verschlüsseln eines von einem Bediener unverschlüsselt eingegebenen Bedienerpasswortes und zum Vergleichen des Verschlüsselungsergebnisses mit dem verschlüsselt in der LMT-Zugriffstabelle gespeicherten Bedienerpasswort.

Dadurch wird verhindert, daß ein unverschlüsseltes Bedienerpaßwort innerhalb des Mobilfunknetzes gespeichert werden muß. Ein Ausspähen wäre folglich nur unmittelbar während der Eingabe des Bedienerpaßwortes im Klartext möglich.

In einer Weiterbildung eines erfindungsgemäßen Betriebs- und Wartungssystems enthält eine Netzeinrichtung, über die mit Hilfe einer in einem Basisstationssteuerungs-Fernsteuermodus betriebenen LMT-Wartungseinrichtung von einem Bediener unter Eingabe seines Bedienerpasswortes konfigurierend zugegriffen wird, eine Steuerung, um das von der LMT-Wartungseinrichtung in Klartext empfangene Bedienerpasswort zu verschlüsseln und verschlüsselt zur Basisstationssteuerung zu übermitteln.

Durch diese Maßnahme wird das Ausspähen eines Bedienerpaßwortes in diesem speziellen Anwendungsfall zusätzlich erschwert.

Eine günstige Ausgestaltungsform eines Betriebs- und Wartungssystems nach der Erfindung sieht vor, daß die Steuerung im Betriebs- und Wartungszentrum zum Generieren verschlüsselter, in der LMT-Zugriffstabelle zu speichernder Bedienerpasswörter vorgesehen ist, durch Bilden der Hash-Funktion aus einer Geheiminformation, aus dem im Klartext eingegebenen Bedienerpasswort und aus einer den Namen des Bedieners enthaltenden Identitätsinformation.

Das Bilden der Hash-Funktion aus einer Geheiminformation, die beispielsweise für einen Netzelementtyp eindeutig ist, aus einer den Namen des Bedieners enthaltenden Identitätsinformation und aus dem im Klartext eingegebenen Bedienerpaßwort führt zu einem verschlüsselten Bedienerpaßwort, das nicht durch Analyseverfahren zu dem im Klartext einzugebenden Bedienerpaßwort führt. Beispielsweise kann die Geheiminformation 64 Bit lang sein, das Bedienerpaßwort bis zu 128 Bit und die Identitätsinformation ebenfalls bis zu 128 Bit. Wenn mit diesen Daten die Hash-Funktion MD5(T.I.S) berechnet wird und hiervon die ersten 64 Bit des verschlüsselten Ergebnisses als Bedienerpaßwort für die LMT-Zugriffstabelle verwendet werden, ist eine Rückanalyse nicht möglich.

Wenn die zur Bildung der Hash-Funktion verwendete Geheiminformation jeweils netzeinrichtungstypspezifisch ist, erhält man außerdem mit demselben Bedienerpaßwort für unterschiedliche Tabellenteile der LMT-Zugriffstabelle unterschiedliche, verschlüsselte, zu speichernde Bedienerpaßwörter.

Wenn das zu speichernde Bedienerpaßwort auf die vorstehend erläuterte Weise verschlüsselt wird, empfiehlt es sich in einer Weiterbildung der Erfindung, die Steuerung von Netzeinrichtungen auszugestalten, um ein im Klartext eingegebenes Bedienerpasswort durch Bilden der Hash-Funktion aus einer für den Netzeinrichtungstyp spezifischen Geheiminformation, aus dem im Klartext eingegebenen Bedienerpasswort und aus einer den Namen des Bedieners enthaltenden Identitätsinformation zu verschlüsseln.

Um die Inbetriebnahme einer Netzeinrichtung auch zu ermöglichen, wenn noch keine LMT-Zugriffstabelle bzw. ein Teil einer solchen in der Netzeinrichtung gespeichert worden ist, ist in jeder Netzeinrichtung ein Speicher mit einem Installationspasswort vorzusehen und mit Information über den Umfang der Zugriffsberechtigung, die einem Bediener die Eingabe von wenigen für die Inbetriebnahme der Netzeinrichtung erforderlichen Konfigurationskommandos erlaubt.

In diesem Fall meldet sich ein Bediener bei der Inbetriebnahme der Netzeinrichtung nicht mit einer für ihn spezifischen Identität und seinem Passwort, sondern mit dem Installationspasswort an und erhält von dem Zugriffskontrollmechanismus die für die Inbetriebnahme erforderlichen Zugriffsberechtigungen.

Eine Weiterbildung eines erfindungsgemäßen Betriebs- und Wartungssystems sieht eine Steuerung im Betriebs- und Wartungszentrum vor, zum Verwalten einer Tabelle aller Basisstationssteuerungen, in denen seit einem durch eine Aktualisierung bedingten Veranlassen des nichtflüchtigen Speicherns mindestens eines Teiles der LMT-Zugriffstabelle ein entsprechender Speichervorgang aufgrund einer Störung nicht ausgeführt worden ist, sowie zum Veranlassen dieses Speichervorgangs, wenn der Wegfall der Störung erkannt ist.

Bei jeder Änderung sicherheitsrelevanter Daten für LMT-Zugriffe, wie zum Beispiel Änderungen durch den Sicherheitsbediener im Betriebs- und Wartungszentrum oder Passwortänderungen durch den LMT-Bediener selbst, müssen die von dieser Änderung betroffenen LMT-Zugriffstabellen in allen Netzeinrichtungsinstanzen aktualisiert werden. Die erwähnte Weiterbildung stellt sicher, daß die LMT-Zugriffstabellen aller Basisstationssteuerungen aktualisiert werden. Darüber hinaus könnte auch eine Tabelle aller übrigen Netzeinrichtungen, in denen eine Aktualisierung der LMT-Zugriffstabelle noch nicht erfolgt ist, im Betriebs- und Wartungszentrum gespeichert und verwaltet werden. Eine besonders günstige Weiterbildung des vorstehend erwähnten Erfindungsgedankens sieht jedoch vor, daß in Basisstationssteuerungen jeweils eine Steuerung zum jeweiligen Verwalten einer Tabelle aller ihr zugeordneten Basisstationen und Transcodier- und Ratenanpaßeinrichtungen, in denen seit einem durch eine Aktualisierung bedingten Veranlassen des nichtflüchtigen Speicherns mindestens eines Teiles der LMT-Zugriffstabelle ein entsprechender Speichervorgang aufgrund einer Störung nicht ausgeführt worden ist, und zum Veranlassen dieses Speichervorgangs, wenn der Wegfall der Störung erkannt ist.

Dadurch braucht die Verfügbarkeit einer Verbindung zu einer Netzeinrichtung, also einer Basisstation oder Transcodierund Ratenanpaßeinrichtung, beziehungsweise die Verfügbarkeit der Netzeinrichtung im Netz nur peripher von der zugeordneten Basisstationssteuerung überprüft zu werden. Außerdem genügt es, wenn eine Kommunikationsverbindung zwischen Basisstationssteuerung und Netzeinrichtung bereitgestellt ist. Eine Kommunikationsverbindung zum Betriebs- und Wartungszentrum braucht in diesem Fall nicht gleichzeitig zur Verfügung zu stehen.

Eine andere günstige Weiterbildung eines erfindungsgemäßen Betriebs- und Wartungssystems sieht vor, daß mindestens der in einer Basisstationssteuerung gespeicherte Teil einer LMT-Zugriffstabelle einen speziellen Sicherheits-Bedienerdatensatz mit einem von einem Sicherheits-Bediener zum Zugriff über eine LMT-Wartungseinrichtung zu benutzenden, spezifischen Sicherheitspasswort und Information über den Umfang einer Zugriffsberechtigung enthält, um einen Zugriff auf Bedienerdatensätze der LMT-Zugriffstabelle innerhalb eines Basisstationssubsystems auch bei Netzbetrieb ohne Betriebsund Wartungszentrum zu ermöglichen.

Ein einen LMT-Zugriff ermöglichendes Bedienerpaßwort muß immer netzweit eindeutig sein. Deshalb enthält eine Netzeinrichtung, über die mit Hilfe einer LMT-Wartungseinrichtung von einem Bediener sein Bedienerpasswort geändert worden ist, eine Steuerung zum Verhindern eines Zugriffes mit dem geänderten Bedienerpasswort, bis das nichtflüchtige Speichern des geänderten Bedienerpasswortes in der LMT-Zugriffstabelle der Netzeinrichtung auf Veranlassung des Betriebs- und Wartungszentrums erfolgt ist.

Eine besonders günstige Ausgestaltungsform eines erfindungsgemäßen Betriebs- und Wartungssystems sieht vor, daß die Information über den Umfang der Zugriffsberechtigung jedes Bedieners in Form einer Berechtigungsprofil-Referenz gespeichert ist, mit von einem Sicherheits-Bediener einzeln festgelegten Berechtigungen von Zugriffsarten auf einzelne Klassen gemanagter Objekte.

Die Zugriffsberechtigungen können hierbei beispielsweise Managementbereiche, wie Konfigurationsmanagement oder Fehlermanagement, festlegen. Außerdem kann die Zugriffsart, beispielsweise passiver Zugriff oder aktiver Zugriff, spezifisch festgelegt werden. Eine solche Berechtigungsprofil-Referenz kann beispielsweise für jeden Netzeinrichtungstyp getrennt mit Hilfe von automatischen Tabellen erstellt werden, mit einer Spalte für alle Klassen gemanagter Objekte, für die die aktuelle Netzeinrichtung eine Master-Datenbasis verwaltet, das heißt für Basisstationssteuerungen alle Klassen von funktionsbezogenen gemanagten Objekten innerhalb des Basisstationssubsystems und von für die Basisstationssteuerung spezifischen hardwarebezogenen gemanagten Objekten, für Basisstationen alle Klassen von für Basisstationen spezifischen hardwarebezogenen gemanagten Objekten und für Transcodier- und Ratenanpaßeinrichtungen alle Klassen von sich auf diese Einrichtungen beziehenden hardwarebezogenen gemanagten Objekten. In einer Befehlsspalte der automatischen Tabelle der Berechtigungsprofil-Referenz werden alle Kommandos aufgelistet, die sich auf die aktuelle Klasse gemanagter Objekte beziehen. Diese beiden Spalten werden automatisch erstellt, so daß sie jeweils vollständig sind. Eine weitere Spalte, die die Gültigkeit der einzelnen Kommandos angibt, ist im Normalzustand leer. In dieser Spalte können die einzelnen Kommandos der einzelnen Klassen gemanagter Objekte von einem Sicherheitsbediener jeweils bedarfsweise als zugriffsberechtigt gekennzeichnet werden.

Eine günstige Ausgestaltungsform einer LMT-Zugriffstabelle eines erfindungsgemäßen Betriebs- und Wartungssystems sieht in jedem Bedienerdatensatz von zum Zugriff auf das Betriebsund Wartungssystem mit Hilfe einer LMT-Wartungseinrichtung berechtigten Bedienern der im Betriebs- und Wartungszentrum gespeicherten LMT-Zugriffstabelle jeweils eine Gültigkeitsdatums- oder Ablaufdatumsangabe vor.

Dadurch wird sichergestellt, daß eine Zugriffsberechtigung ohne zwischenzeitliche Erneuerung dieser Datumsangabe durch einen Sicherheitsbediener zwangsweise erlischt.

Eine Weiterbildung eines erfindungsgemäßen Betriebs- und Wartungssystems sieht im Bedienerdatensatz von zum Zugriff auf das Betriebs- und Wartungssystem mit Hilfe einer LMT-Wartungseinrichtung berechtigten Bedienern der im Betriebs- und Wartungszentrum gespeicherten LMT-Zugriffstabelle jeweils eine Information darüber vor, ob der Bediener sein Bedienerpasswort mit Hilfe einer an eine Netzeinrichtung eines Basisstationssubsystems des Mobilfunknetzes angeschlossen LMT-Wartungseinrichtung ändern darf.

Ein solcher Eintrag ist beispielsweise sinnvoll, wenn für mehrere Bediener ein Passwort verwendet werden soll. In diesem Falle sollte ein einzelner Bediener das Passwort nicht ändern können. Eine Änderung empfiehlt sich dann nur vom Sicherheitsbediener im Betriebs- und Wartungszentrum.

Eine Weiterbildung eines Betriebs- und Wartungssystems gemäß der Erfindung sieht im Bedienerdatensatz von zum Zugriff auf das Betriebs- und Wartungssystem mit Hilfe einer LMT-Wartungseinrichtung berechtigten Bedienern der im Betriebs- und Wartungszentrum gespeicherten LMT-Zugriffstabelle jeweils eine Information darüber vor, für welche Typen von Netzeinrichtungen der Bediener zugriffsberechtigt ist.

Eine spezielle Weiterbildung dieses Aspektes der Erfindung sieht außerdem vor, daß der Bedienerdatensatz von zum Zugriff auf das Betriebs- und Wartungssystem mit Hilfe einer LMT-Wartungseinrichtung berechtigten Bedienem jeweils eine Information enthält, für welche physikalischen Einrichtungen der Typen von Netzeinrichtungen der Bediener jeweils zugriffsberechtigt ist.

Dadurch kann bestimmten Bedienern der Zugriff auf ganz spezielle Netzeinrichtungen gewährt werden, der Zugriff auf andere Netzeinrichtungen desselben Typs jedoch unterbunden werden.

Nachstehend wird die Erfindung anhand eines Ausführungsbeispieles unter Bezugnahme auf die Figuren näher erläutert. Es zeigen:
- Figur 1: den für die Erfindung relevanten Teil eines Mobilfunknetzes;
- Figur 2: einen LMT-Zugriffs-Anmeldevorgang, bezogen auf einzelne Netzelemente;
- Figur 3 und 4: den Änderungsvorgang eines Bedienerpasswortes durch den Bediener von einer LMT-Wartungseinrichtung, die im BSC-Fernsteuermodus betrieben ist beziehungsweise unmittelbar an einer Basisstationssteuerung.

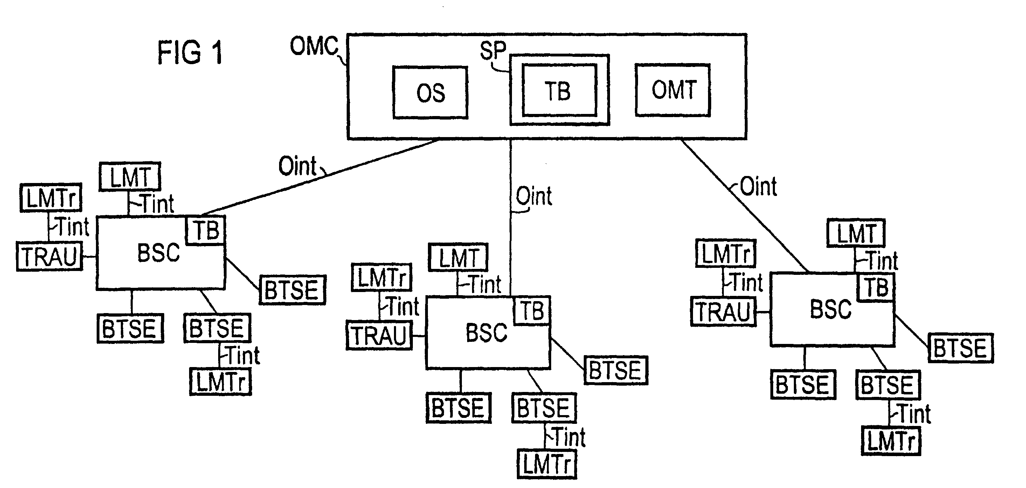

Die Figur 1 zeigt als Teil eines Basisstationssubsystems drei Basisstationssteuerungen BSC, jeweils mit drei Funkbasisstationen BTSE und einer Transcodier- und Ratenanpaßeinheit TRAU. Im Bereich jeder der dargestellten Basisstationssteuerungen BSC ist beispielhaft eine Wartungseinrichtung LMT gezeigt, die über eine Schnittstelle Tint an die Basisstationssteuerung BSC angeschlossen ist. Außerdem ist jeweils eine Wartungseinrichtung LMTr gezeigt, die über eine Schnittstelle Tint mit der Transcodier- und Ratenanpaßeinheit TRAU gekoppelt ist sowie eine Wartungseinrichtung LMTr, die über eine Schnittstelle Tint an eine der Funkbasisstationen BTSE jeder Basisstationssteuerung BSC angeschlossen ist. Das Bezugszeichen LMTr soll im Gegensatz zu dem Bezugszeichen LMT kenntlich machen, daß die entsprechende Wartungseinrichtung im Fernsteuermodus, der auch mit der englischsprachigen Fachbezeichnung "remote mode" bezeichnet wird, auf die Basisstationssteuerung BSC zugreift.

Die drei in der Figur 1 dargestellten Basisstationssteuerungen BSC sind jeweils über eine Schnittstelle Oint mit einem Betriebs- und Wartungszentrum OMC gekoppelt, in dem eine Betriebs- und Wartungseinrichtung OMT vorhanden ist, eine erfindungsgemäße Steuerung OS sowie ein Speicher SP mit einer LMT-Zugriffstabelle TB.

Wie in den Basisstationssteuerungen BSC von Figur 1 dargestellt, ist in jeder dieser Basisstationssteuerungen die LMT-Zugriffstabelle TB enthalten. Der in jeder Basisstation BTSE enthaltene BTSE-Tabellenteil der LMT-Zugriffstabelle TB und der in jeder Transcodier- und Ratenanpaßeinrichtung TRAU enthaltene TRAU-Tabellenteil der LMT-Zugriffstabelle sind in der Figur 1 nicht im einzelnen dargestellt. Die genannten Tabellenteile beziehungsweise die LMT-Zugriffstabelle sind in den einzelnen Netzelementen selbstverständlich nichtflüchtig gespeichert, beispielsweise auf einem Plattenspeicher oder in einem programmierbaren elektronischen nichtflüchtigen Speicher.

Die in dem in Figur 1 dargestellten Betriebs- und Wartungssystem enthaltene LMT-Zugriffstabelle TB wird im Betriebs- und Wartungszentrum OMC über eine Wartungseinrichtung OMT von einem Sicherheitsbediener, beispielsweise einem Systemadministrator oder einem für die globale Sicherheit des Betriebsund Wartungssystems zuständigen Bediener erstellt, indem dieser für jeden zugelassenen LMT-Bediener beziehungsweise für jede LMT-Bedienergruppe einen Bedienerdatensatz erstellt. Dieser Bedienerdatensatz enthält in dem Ausführungsbeispiel eine Identitätsinformation des Benutzers, die aus einem eventuell generisch festgelegten Benutzernamen besteht. Außerdem enthält sie ein Bedienerpasswort, das im Betriebs- und Wartungszentrum OMC nach einem später noch erläuterten Verfahren verschlüsselt wird und dann im Bedienerdatensatz gespeichert wird. Darüber hinaus enthält der Bedienerdatensatz ein Ablaufdatum, also das Datum, ab dem ein Zugriff des LMT-Bedieners nicht mehr gültig ist. Zudem ist eine Information "benutzeränderbar" enthalten, die angibt, ob das Bedienerpasswort vom LMT-Bediener selbst oder nur am Betriebs- und Wartungszentrum OMC geändert werden darf. Darüber hinaus enthält der Bedienerdatensatz eine Angabe über Netzeinrichtungstypen, die den Netzeinrichtungstyp beziehungsweise die Netzeinrichtungstypen definiert, für die ein LMT-Bedienerzugriff erlaubt ist. Mögliche Werte hiervon sind BSC im Lokalmodus oder im Fernsteuermodus, BTSE im Lokalmodus und TRAU im Lokalmodus. Darüber hinaus enthält der Bedienerdatensatz Netzeinrichtungsangaben, die die physikalischen Netzeinrichtungen der vorher berechtigten Netzeinrichtungstypen festlegt, für die ein LMT-Bedienerzugriff erlaubt ist. Mögliche Werte hierfür sind "alle" für alle Instanzen der gemanagten Objekte entsprechend den zugelassenen Netzeinrichtungstypen oder "Wertesatz", der einzelnen Netzeinrichtungsinstanzen bestimmter Netzeinrichtungstypen innerhalb eines Basisstationssubsystembereichs festlegt. Hierbei können vor allem im BSC-Fernsteuermodus verschiedene Zugriffsbereiche definiert werden. Außerdem enthält jeder Bedienerdatensatz eine Berechtigungsprofil-Referenz, die einen Zeiger auf ein für den entsprechenden LMT-Bediener beziehungsweise die LMT-Bedienergruppe spezifisches Berechtigungsprofil enthält.

Der Sicherheitsbediener weist am Betriebs- und Wartungszentrum OMC jedem LMT-Bediener einen spezifischen Satz von Berechtigungen zu, der als Berechtigungsprofilreferenz bezeichnet wird. Diese Berechtigungen legen zum einen die Managementbereiche fest, die von dem entsprechenden LMT-Bediener verwaltet werden dürfen. Beispiel hierzu sind Konfigurationsmanagement oder Fehlermanagement. Außerdem legen diese Berechtigungen die Zugriffsart fest, beispielsweise ob ein passiver Zugriff wie GET oder ein aktiver Zugriff wie SET, DELETE oder CREATE zugelassen sind. Die Definition einer Berechtigungsprofilreferenz erfolgt hierbei im Ausführungsbeispiel für jeden Netzeinrichtungstyp getrennt mit Hilfe von automatischen Tabellen mit drei Spalten (oder Zeilen), die alle automatisch festgelegt werden und von denen nur eine durch den Sicherheitsbediener beeinflußbar ist. Eine Spalte (oder Zeile) listet alle Klassen gemanagter Objekte auf, für die der entsprechende Netzeinrichtungstyp eine Masterdatabase, also einen Teil der LMT-Zugriffstabelle enthält. Das sind für Basisstationssteuerungen BSC alle Klassen von funktionsbezogenen gemanagten Objekten innerhalb des Basisstationssubsystems und von basisstationssteuerungsspezifischen hardwarebezogenen gemanagten Objekten, für Basisstationen BTSE alle Klassen von hardwarebezogenen gemanagten Objekten, die basisstationsspezifisch sind und für Transcodier- und Ratenanpaßeinrichtungen TRAU alle Klassen von hardwarebezogenen gemanagten Objekten, die sich auf eine Transcodier- und Ratenanpaßeinrichtungen TRAU beziehen. Eine weitere Spalte (beziehungsweise Zeile) enthält eine Liste aller Kommandos, die sich auf die jeweiligen, in der zuvor genannten Spalte beziehungsweise Zeile angegebenen Klasse gemanagter Objekte beziehen. Die dritte Spalte (beziehungsweise Zeile) enthält eine Angabe über die Gültigkeit der Berechtigung. Diese Spalte (beziehungsweise Zeile) ist die einzige von einer Sicherheitsbedienperson änderbare Spalte (beziehungsweise Zeile). Die in dieser Spalte automatisch eingestellten Werte sind "ungültig" ("leer"). Der Sicherheitsbediener kann in dieser Spalte (beziehungsweise Zeile) die einem LMT-Bediener zugewiesenen Berechtigungen als "gültig" eintragen. Nachdem die letztgenannte Spalte aktualisiert ist, wird die Tabelle im Betriebs- und Wartungszentrum OMC als Berechtigungsprofilreferenz gespeichert und bei der vorstehend beschriebenen Definition eines Bedienerdatensatzes verwendet.

In dem beschriebenen Ausführungsbeispiel erfolgen im Betriebs- und Wartungszentrum folgende sicherheitsrelevante Aktivitäten:
- Das Erstellen von Berechtigungsprofilen;
- das Erstellen von Bedienerdatensätzen mit verschlüsseltem Bedienerpasswort;
- das Bilden und Speichern wenigstens einer LMT-Zugriffstabelle, bestehend aus einem BSC-Tabellenteil für Zugriffe auf Basisstationssteuerungen BSC, einem BTSE-Tabellenteil für Zugriffe auf Basisstationen BTSE und einem TRAU-Tabellenteil mit Datensätzen für LMT-Zugriffe auf Transcodierund Ratenanpaßeinrichtungen; und
- das Übertragen der LMT-Zugriffstabelle, also des BSC-Tabellenteils, des BTSE-Tabellenteils und des TRAU-Tabellenteils an alle Basisstationssteuerungen BSC.

In den Basisstationssteuerungen BSC werden alle LMT-Zugriffstabellenteile auf eine Festplatte gespeichert, der BTSE-Tabellenteil wird an alle Basisstationen BTSE übertragen und der TRAU-Tabellenteil wird an alle Transcodierund Ratenanpaßeinrichtungen TRAU übertragen.

In jeder Basisstation BTSE wird der BTSE-Tabellenteil der LMT-Zugriffstabelle in einem nicht-flüchtigen Speicherbereich gespeichert.

In jeder Transcodier- und Ratenanpaßeinrichtung TRAU wird der TRAU-Tabellenteil der LMT-Zugriffstabelle in einem nicht-flüchtigen Speicherbereich gespeichert.

Das verschlüsselte LMT-Bedienerpasswort wird im Betriebs- und Wartungszentrum OMC unter Verwendung einer für jeden Netzeinrichtungstyp eindeutigen Geheiminformation von 64 Bit Länge, unter Verwendung des im Klartext eingegebenen Bedienerpasswortes von bis zu 128 Bit Länge und unter Verwendung einer Identitätsinformation von bis zu 128 Bit Länge, die den Bedienernamen enthält, erstellt. Mit diesen Daten wird die Hash-Funktion MD5 (T.I.S) berechnet. Die ersten 64 Bit des verschlüsselten Ergebnisses werden als Bedienerpasswort im Bedienerdatensatz verwendet. Alle im Betriebs- und Wartungszentrum erstellten Bedienerdatensätze für einen Netzeinrichtungstyp bilden einen Tabellenteil der LMT-Zugriffstabelle, also den BSC-Tabellenteil, den BTSE-Tabellenteil oder den TRAU-Tabellenteil. Der BSC-Tabellenteil gilt für LMT-Zugriffe auf Basisstationssteuerungen BSC sowohl im Lokalmodus als auch im Fernsteuermodus der LMT-Wartungseinrichtung LMT, LMTr. Um sicherzustellen, daß das Mobilfunknetz auch bei Ausfall des Betriebs- und Wartungssystems OMC oder der Schnittstelle Oint zum Betriebs- und Wartungszentrum OMC noch funktionsfähig bleibt, sind in den Basisstationssteuerungen BSC auch der BTSE-Tabellenteil und der TRAU-Tabellenteil gespeichert.

Zum Zugreifen über eine LMT-Wartungseinrichtung auf das Betriebs- und Wartungssystem des Mobilfunknetzes muß sich ein Bediener über die LMT-Wartungseinrichtung LMT, LMTr beim Betriebs- und Wartungssystem anmelden. Der entsprechende Vorgang wird nachstehend mit LMT-Login bezeichnet, wobei der Bediener folgende Login-Parameter eingibt: Eine Benutzeridentitätskennung wie zum Beispiel seinen Namen, sein Benutzerpasswort und eine Angabe über den Betriebsmodus der LMT-Wartungseinrichtung LMT, LMTr. Der LMT-Betriebsmodus kann entweder Lokalmodus oder Fernsteuermodus sein.

Nachstehend wird das Sicherheitsmanagement in einem Betriebsund Wartungssystem gemäß dem Ausführungsbeispiel für den Fall eines LMT-Zugriffs erläutert, wenn die LMT-Wartungseinrichtung sich im Lokalmodus befindet. Die LMT-Wartungseinrichtung LMT, LMTr kann hierbei an drei unterschiedlichen Netzeinrichtungen, nämlich einer Basisstationssteuerung BSC, einer Basisstation BTSE oder einer Transcodier- und Ratenanpaßeinrichtungen TRAU betrieben werden. Wenn daher im Zusammenhang mit dem beschriebenen Sicherheitsmanagementablauf bei einem Zugriff einer LMT-Wartungseinrichtung im Lokalmodus der Begriff Netzeinrichtung verwendet wird, ist entweder eine Basisstationssteuerung BSC, eine Basisstation BTSE oder eine Transcodier- und Ratenanpaßeinrichtung TRAU gemeint.

In einem ersten Schritt gibt der Bediener die Login-Parameter ein, wobei als Betriebsmodus der LMT-Wartungseinrichtung LMT, LMTr der "Lokalmodus" eingegeben wird. Die weiteren Parameter sind "UserID", wobei es sich um die genannte Benutzeridentitätsinformation (Name) handelt und "Passwort", bei dem es sich um das Benutzerpasswort handelt.

In einem nächsten Schritt erzeugt eine Steuerung in der LMT-Wartungseinrichtung LMT, LMTr eine Nachricht mit diesen Parametern UserID, Passwort, Lokalmodus und sendet diese an die lokale Netzeinrichtung, an der die LMT-Wartungseinrichtung LMT, LMTr angeschlossen ist. Die Netzeinrichtung sucht anhand des Parameters UserID den entsprechenden Bedienerdatensatz in dem für die Netzeinrichtung zuständigen Tabellenteil der LMC-Zugriffstabelle TB.

Dann untersucht die Steuerung der Netzeinrichtung, ob der Eintrag "Ablaufdatum" des Bedienerdatensatzes größer ist als das aktuelle Datum. Ist dies der Fall und der Bedienerdatensatz noch gültig, berechnet die Steuerung der Netzeinrichtung die Hash-Funktion MD5(T.I.S) mit einer Geheiminformation, die innerhalb der Software der Steuerung der Netzeinrichtung versteckt ist, dem Passwort, das vom Bediener an der LMT-Wartungseinrichtung LMT, LMTr im Klartext eingegeben worden ist und der UserID, die vom Bediener eingegeben worden ist. Die ersten 64 Bit der berechtigten Hash-Funktion werden mit dem in dem Bedienerdatensatz des LMT-Zugriffstabellenteils enthaltenen Bedienerpasswort verglichen. Bei Übereinstimmung senden die Netzeinrichtung eine Login-Bestätigung an die LMT-Wartungseinrichtung LMT, LMTr. Wenn sich in einer Ausgestaltung des Ausführungsbeispiels die Angabe Ablaufdatum nicht auf den Zugriff durch den Bediener im allgemeinen, sondern nur auf den Zugriff mit einem bisherigen Bedienerpasswort bezieht und in dem Bedienerdatensatz eine Angabe enthalten ist, die den Bediener berechtigt, sein Bedienerpasswort selbst zu ändern, wird das alte, abgelaufene Passwort von der Netzeinrichtung verschlüsselt und als altes Passwort zwischengespeichert. Daraufhin fordert die Steuerung der Netzeinrichtung den Bediener an der LMT-Wartungseinrichtung LMT, LMTr auf, sein Passwort zu ändern.

Ergibt der Vergleich eines in der Netzeinrichtung verschlüsselten Bedienerpasswortes mit dem in dem Bedienerdatensatz verschlüsselt enthaltenen Bedienerpasswort keine Übereinstimmung, wird der Login-Versuch abgelehnt und die Schnittstelle Tint der Netzeinrichtung zu der LMT-Wartungseinrichtung LMTr, LMT bleibt gesperrt.

Unabhängig davon, ob der Login-Versuch erfolgreich ist oder nicht, erzeugt die Netzeinrichtung eine Sicherheitsalarmmeldung, beispielsweise gemäß ISO/IEC 10164-7 beziehungsweise ITU-T Rec. X.736, die an das Betriebs- und Wartungszentrum OMC über die Schnittstelle Oint übertragen wird. Diese Meldung wird in der Netzeinrichtung zwischengespeichert und bleibt solange im Pufferspeicher, bis eine Kommunikation mit dem Betriebs- und Wartungszentrum OMC ordnungsgemäß abgewikkelt ist beziehungsweise eine Bestätigung von dem Betriebsund Wartungszentrum OMC empfangen worden ist.

Bei der Erstinstallation einer Netzeinrichtung, also dem Einrichten einer Netzeinrichtung vorort mit Hilfe einer LMT-Wartungseinrichtung, liegen in der Netzeinrichtung noch keine Bedienerdatensätze vor. Daher erfolgt in diesem Fall das Anmelden des Bedieners mit Hilfe eines Default-Passwortes, das beispielsweise in einem EPROM der Netzeinrichtung fest gespeichert ist und dem LMT-Wartungseinrichtungsbediener bekannt ist. Eine diesem Default-Passwort zugeordnete minimale Berechtigungsprofil-Referenz erlaubt dem Bediener nur die Eingabe von Konfigurationskommandos über die LMT-Wartungseinrichtung LMT, LMTr, die für die Inbetriebnahme der Netzeinrichtung erforderlich sind.

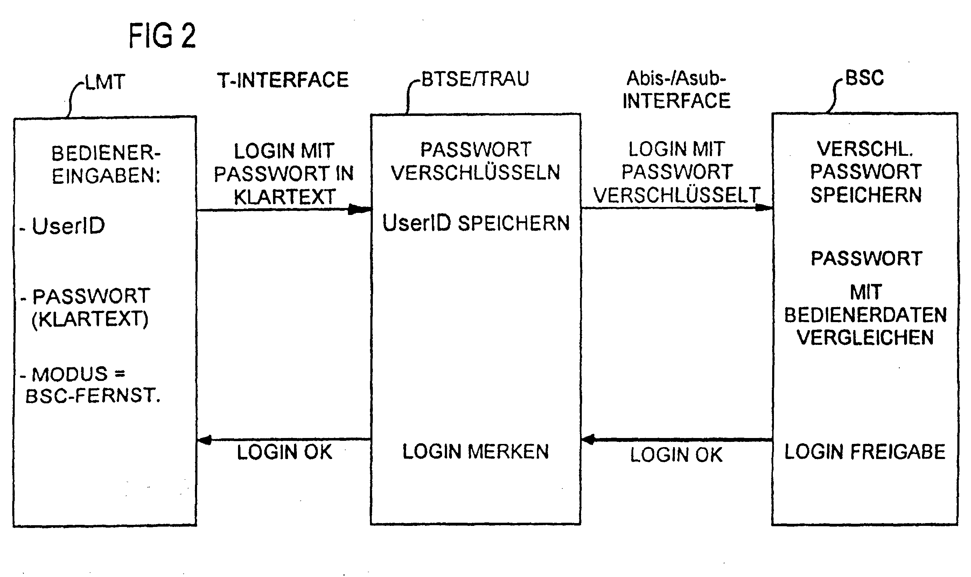

Nachstehend wird unter Bezugnahme auf Figur 2 der Anmeldevorgang Login eines Bedieners mit Hilfe einer LMT-Wartungseinrichtung an einer Basisstation BTSE oder einer Transcodier-und Ratenanpaßeinrichtung TRAU im BSC-Fernsteuermodus zum Zugreifen auf eine Basisstationssteuerung BSC beschrieben. Hierzu gibt der Bediener an der LMT-Wartungseinrichtung LMTr, die entweder an einer Basisstation BTSE oder an einer Transcodier- und Ratenanpaßeinrichtung TRAU angeschlossen ist, seine Identitätskennung "UserID", sein Bedienerpasswort "Passwort" und den LMT-Betriebsmodus "BSC-Fernsteuermodus" ein. Eine Steuerung in der LMT-Wartungseinrichtung LMTr erzeugt eine Nachricht mit diesen Parametern und sendet diese an die lokale Netzeinrichtung, also eine Basisstation BTSE oder eine Transcodier- und Ratenanpaßeinrichtung TRAU. In dieser Nachricht ist das Bedienerpasswort in Klartext enthalten. Um zu verhindern, daß dieses Passwort über längere Abisbeziehungsweise Asub-Strecken unverschlüsselt übertragen wird, bildet eine Steuerung in der lokalen Netzeinrichtung BTSE oder TRAU die Hash-Funktion MD5 (T.I.S) mit Hilfe einer in der Software der Netzeinrichtung enthaltenen, jedoch für den Netzeinrichtungstyp Basisstationssteuerung gültigen Geheiminformation, dem Passwort und der Identitätsinformation UserID. Außerdem wird in der Netzeinrichtung BSTE beziehungsweise TRAU die Identitätsinformation UserID gespeichert. Daraufhin sendet die lokale Netzeinrichtung eine Login-Nachricht mit der UserID und dem verschlüsselten Passwort an die Basisstationssteuerung BSC weiter.

In der Basisstationssteuerung BSC erfolgt die Überprüfung der Passwortgültigkeit und die Identifizierung des Benutzers, wobei derselbe Algorithmus verwendet wird, wie beim oben beschriebenen Anmeldevorgang im Lokalmodus. Die Basisstationssteuerung BSC sendet anschließend an die Netzeinrichtung BTSE oder TRAU, über die das Login-Verfahren abläuft, eine positive oder negative Quittungsmeldung. Die Netzeinrichtung BTSE oder TRAU merkt sich diese Quittungsmeldung und überträgt sie an die LMT-Wartungseinrichtung. In der Figur wird die Übertragung einer positiven Quittungsmeldung Login-Okay dargestellt.

Zusätzlich erzeugt die Basisstationssteuerung BSC, wie bereits vorstehend für den Anmeldevorgang im Lokalmodus beschrieben, eine Sicherheitsalarmmeldung, die an das Betriebsund Wartungszentrum OMC übertragen und dort gespeichert wird. Der letztgenannte Schritt ist in Figur 2 nicht dargestellt, da Figur 2 sich auf die Zusammenhänge zwischen der LMT-Wartungseinrichtung LMTr, einer Netzeinrichtung und der Basisstationssteuerung BSC beschränkt.

Es gibt mehrere Möglichkeiten, den Zugriff eines Bedieners über eine LMT-Wartungseinrichtung LMT, LMTr auf das Betriebsund Wartungssystem des Mobilfunknetzes zu verhindern. Eine Möglichkeit ist, daß der Sicherheitsbediener am Betriebs- und Wartungszentrum OMC den Parameter "Ablaufdatum" in dem diesem Bediener zugeordneten Bedienerdatensatz auf ein Datum setzt, das bereits abgelaufen ist. In diesem Falle muß der Sicherheitsbediener zusätzlich sicherstellen, daß der LMT-Bediener, dessen Bedienerzugriffe für die Zukunft unterbunden werden sollen, nicht berechtigt ist, das Passwort zu ändern. Falls im Bedienerdatensatz eine entsprechende Berechtigung eingetragen ist, muß der Sicherheitsbediener folglich einen solchen Eintrag ebenfalls abändern auf fehlende Berechtigung. Dieses Verfahren ist besonders geeignet, Bedienerzugriffe vorübergehend zu sperren, da die übrigen Daten des Bedienerdatensatzes erhalten bleiben.

Der Sicherheitsbediener kann jedoch auch den gesamten Bedienerdatensatz in der LMT-Zugriffstabelle löschen. Dadurch wird ein Bediener beziehungsweise eine Bedienergruppe endgültig gesperrt.

Falls ein gemeinsames Passwort von mehreren Bedienern einer Bedienergruppe verwendet wird und die Gefahr besteht, daß dieses Passwort einer unbefugten Person bekannt geworden ist, kann der Sicherheitsbediener durch Ändern des Bedienerpasswortes im entsprechenden Bedienerdatensatz für die Zukunft einen Zugriff mit diesem Passwort verhindern.

Unabhängig davon, auf welche Weise der Zugriff eines Bedieners unterbunden werden soll, muß die aktuelle LMT-Zugriffstabelle nach dem Ändern von Einträgen durch den Sicherheitsbediener im Betriebs- und Wartungszentrum OMC an jede Instanz der aktuellen Netzeinrichtungstypen übertragen werden. Das Betriebs- und Wartungszentrum OMC erzeugt eine Sicherheitsalarmmeldung analog zu der bereits in Zusammenhang mit den Login-Vorgängen beschriebenen Sicherheitsalarmmeldungen.

Falls ein Bediener berechtigt ist, sein Passwort selbsttätig zu ändern, kann er dieses mit Hilfe einer LMT-Wartungseinrichtung LMT, LMTr, die auf eine Basisstationssteuerung BSC zugreift.

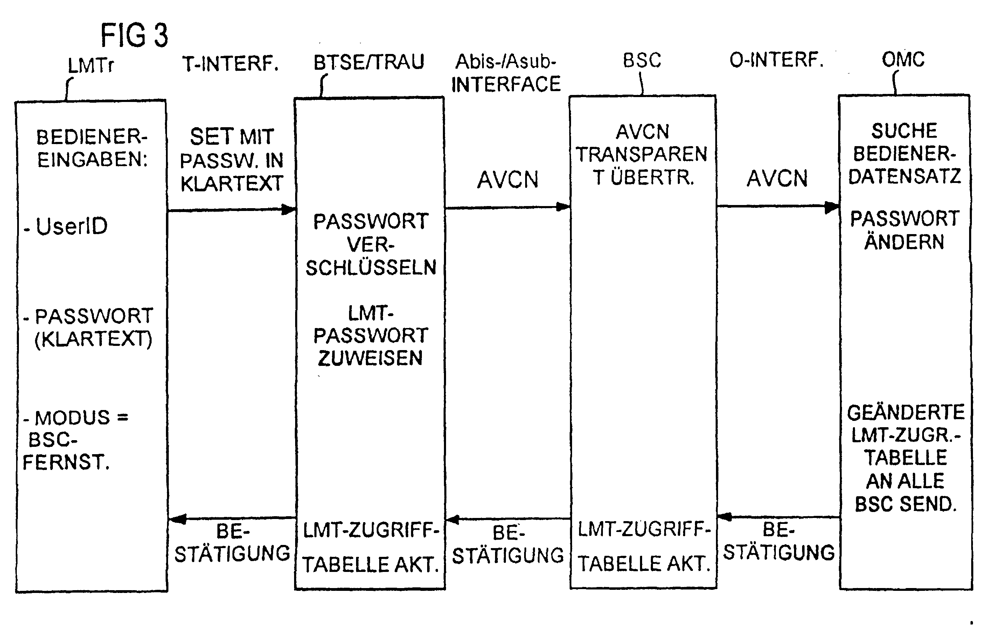

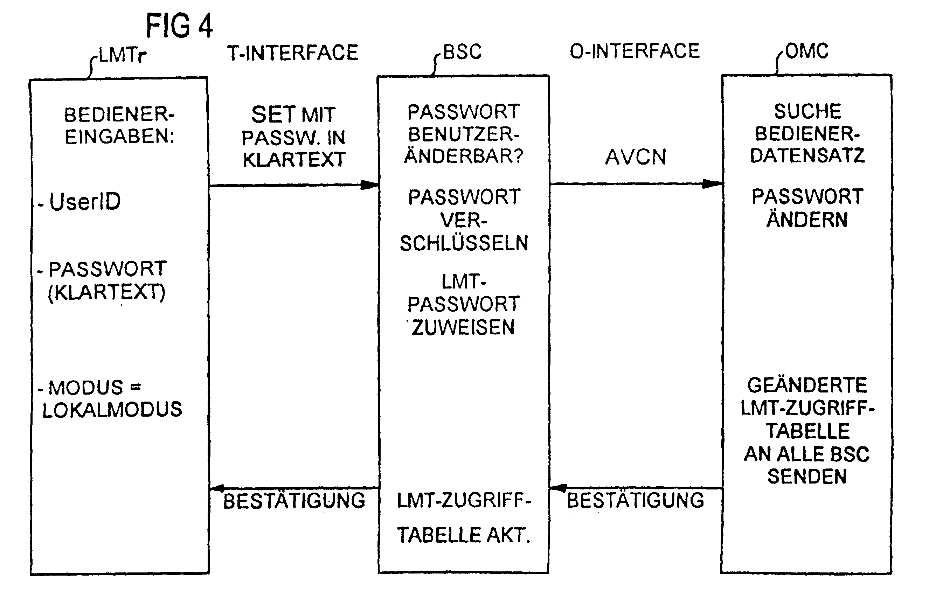

Nachstehend wird unter Bezugnahme auf die Figuren 3 und 4 das Ändern eines eigenen Passwortes durch einen LMT-Bediener beschrieben.

In jeder Netzeinrichtung existiert eine Instanz eines gemanagten Objektes "LMTaccess" mit dem Attribut "LMTpassword". die dazu dient, eine Meldung AttributeValueChangedNotification zu erzeugen. Diese Meldung AttributeValueChangedNotification (beispielsweise gemäß ISU/IEC 10164-1 beziehungsweise ITU-T Rec. X.730), die in den Figuren 3 und 4 mit AVCN bezeichnet ist, wird in einem eine Bestätigung erwartenden Modus an das Betriebs- und Wartungszentrum OMC gesendet.

Nach erfolgreichem Anmeldevorgang Login kann ein LMT-Bediener mit dem Kommando "Change Password" ein eigenes neues Passwort für den aktuellen LMT-Betriebsmodus eingeben. Eine solche Änderung des eigenen Passwortes ist für den LMT-Bediener implizit möglich, wenn sein altes Passwort ungültig geworden ist und im Benutzerdatensatz der LMT-Zugriffstabelle TB eingetragen ist, daß der Benutzer zur Passwortänderung berechtigt ist.

Nach Eingabe des Kommandos "Change Password" an eine LMT-Wartungseinrichtung LMT, LMTr erzeugt die Steuerung dieser LMT-Wartungseinrichtung LMT, LMTr eine Nachricht "SET" mit dem neuen Passwort und sendet diese zunächts an die lokale Netzeinrichtung, beispielsweise eine Basisstationssteuerung BSC, eine Basisstation BTSE oder eine Transcodier- und Ratenanpaßeinrichtung TRAU. Diese Nachricht "SET" wird also über die T-Schnittstelle T-INTERFACE übertragen. Der weitere Ablauf des Passwortänderungsvorganges hängt unter anderem vom Betriebsmodus der LMT-Wartungseinrichtung LMT, LMTr ab. Nachstehend wird daher zuerst der Ablauf für den Fall beschrieben, daß die LMT-Wartungseinrichtung LMTr im BSC-Fernsteuermodus über eine Basisstation BTSE oder eine Transcodier- und Ratenanpaßeinrichtung TRAU auf eine Basisstationssteuerung BSC zugreift. Dieser Ablauf ist in Figur 3 dargestellt. Darauf folgend werden die Unterschiede des Passwortänderungsablaufs für den Fall dargestellt, daß die LMT-Wartungseinrichtung LMT im Lokalmodus über die T-Schnittstelle T-INTERFACE an eine Basisstationssteuereinrichtung BSC angeschlossen ist.

In dem Fall gemäß Figur 3 gibt der Bediener neben dem (nicht dargestellten) Kommando "Change Password" seine Identitätskennung UserID, sein Passwort in Klartext und als Modus den BSC-Fernsteuermodus ein. Wie schon erwähnt, überträgt daraufhin die Steuerung der LMT-Wartungseinrichtung LMTr eine Nachricht SET mit dem in Klartext vorliegenden Passwort über die T-Schnittstelle T-INTERFACE an die Netzeinrichtung BTSE/TRAU, über die im BSC-Fernsteuermodus auf die Basisstationssteuerung BSC zugegriffen wird. In der Netzeinrichtung BTSE/TRAU berechnet die Steuerung der Netzeinrichtung BTSE/TRAU die Hash-Funktion mit Hilfe einer in der Software der Netzeinrichtung BTSE/TRAU enthaltenen Geheiminformation, dem neuen Passwort und dem Bedienernamen UserID, der beim Login-Vorgang gespeichert worden ist. Die ersten 64 Bit des Ergebnisses werden als neues verschlüsseltes Passwort an die Basisstationssteuerung BSC übertragen und dort, sofern das Passwort benutzeränderbar ist und noch gültig ist, dem Attribut "LMTpassword" zugewiesen. Die Instanz eines gemanagten Objektes LMTaccess erzeugt eine AttributeValueChangedNotification AVCN, die über die Abis-/Asub-Schnittstelle Abis/Asub-INTER-FACE zur Basisstationssteuerung BSC und von dieser transparent über die O-Schnittstelle O-INTERFACE zum Betriebs- und Wartungssystem OMC übertragen wird. Unter Verwendung des Wertes "Old Attribute Value", der dem alten verschlüsselten Passwort entspricht und beim Anmeldevorgang Login gespeichert worden ist, findet die Steuerung innerhalb des Betriebs- und Wartungszentrums OMC den aktuellen Bedienerdatensatz in der LMT-Zugriffstabelle und ersetzt den Wert "Passwort" durch den neuen Wert "LMTpassword". Das Betriebs- und Wartungszentrum OMC veranlaßt daraufhin die Übertragung der geänderten LMT-Zugriffstabelle an alle Basisstationssteuerungen BSC. Ein entsprechendes Kommando wird über die O-Schnittstelle O-INTERFACE an die Basisstationssteuerung BSC übertragen. In der Basisstationssteuerung BSC wird die LMT-Zugriffstabelle aktualisiert. Außerdem wird das Kommando über die Abis- beziehungsweise Asub-Schnittstelle Abis/Asub-INTERFACE an die Netzeinrichtung BTSE/TRAU übertragen, in der ebenfalls die LMT-Zugriffstabelle aktualisiert wird. Die Netzeinrichtung BTSE/TRAU überträgt eine Bestätigungsmeldung über die T-Schnittstelle T-INTERFACE an die LMT-Wartungseinrichtung LMTr. Das neue Passwort gilt nur, wenn die Bestätigungsmeldung des Betriebs- und Wartungszentrums OMC bis zur LMT-Wartungseinrichtung LMTr übertragen werden kann. Damit wird sichergestellt, daß das neue Passwort vom Betriebs- und Wartungszentrum OMC aus im gesamten Mobilfunknetz aktualisiert wird.

Da in dem Ausführungsbeispiel gemäß Figur 3 die LMT-Wartungseinrichtung LMTr im BSC-Fernsteuermodus betrieben ist, muß die Netzeinrichtung BTSE/TRAU, die eine Basisstation BTSE oder eine Transcodier- und Ratenanpaßeinrichtung TRAU sein kann, zum Verschlüsseln des Passwortes eine Geheiminformation verwenden, die dem Netzeinrichtungstyp Basisstationssteuerung BSC zugeordnet ist.

Nachstehend wird unter Bezugnahme auf Figur 4 derselbe Ablauf für den Fall beschrieben, daß die LMT-Wartungseinrichtung LMT im Lokalmodus an einer Basisstationssteuerung BSC angeschlossen ist. Hierbei wird nur auf die Unterschiede zum vorstehend unter Bezugnahme auf Figur 3 beschriebenen Ablauf eingegangen.

Als Bedienereingaben sind neben der UserID und dem in Klartext eingegebenen Passwort als Modusangabe der Lokalmodus eingegeben. Daraufhin wird die Nachricht SET mit dem in Klartext vorliegenden Passwort über die T-Schnittstelle T-INTERFACE unmittelbar zur Basisstationssteuerung BSC übertragen. In der Basisstationssteuerung BSC laufen hierbei weitgehend dieselben Abläufe ab, wie sie vorstehend unter Bezugnahme auf Figur 3 in Zusammenhang mit der Netzeinrichtung BTSE/TRAU beschrieben worden sind. Die von der Basisstationssteuerung BSC ausgegebene AttributeValueChangedNotification AVCN wird hierbei unmittelbar über die O-Schnittstelle O-INTERFACE zum Betriebs- und Wartungszentrum OMC übertragen. Der übrige Ablauf ist identisch wie im vorstehend beschriebenen Beispiel.

In dem Beispiel gemäß Figur 3 und in dem Beispiel gemäß Figur 4 wird ein Sicherheitsalarmreport generiert und im Betriebsund Wartungszentrum OMC gespeichert.

Die beschriebene Instanz eines gemanagten Objektes "LMTaccess" mit dem Attribut "LMTpassword" existiert im Ausführungsbeispiel in jeder Basisstation BTSE und jeder Transcodier- und Ratenanpaßeinrichtung TRAU als Instanz eines hardwarebezogenen gemanagten Objektes und in jeder Basisstationssteuerung BSC als Instanz eines funktionsbezogenen gemanagten Objektes. Aufgrund ihrer sehr beschränkten Funktion wird sie auch als "Dummy"-Instanz bezeichnet.

Bei jeder Änderung sicherheitsrelevanter Daten für LMT-Zugriffe, also beispielsweise bei Änderungen durch den Sicherheitsbediener am Betriebs- und Wartungszentrum OMC oder bei Passwortänderungen durch den LMT-Bediener selbst, müssen die entsprechenden LMT-Zugriffstabellen in allen Netzelementinstanzen zentral vom Betriebs- und Wartungszentrum OMC aus aktualisiert werden. Hierzu verwaltet das Betriebs- und Wartungszentrum OMC eine Tabelle mit allen Basisstationssteuerungen BSC, die nicht den aktuellen Stand der LMT-Zugriffstabelle haben. Dies kann beispielsweise aufgrund eines Ausfalls der O-Schnittstelle O-INTERFACE, durch einen internen Fehler innerhalb einer Basisstationssteuerung BSC usw. bedingt sein. Die geänderte LMT-Zugriffstabelle wird dann automatisch an diese Basisstationssteuerungen BSC gesendet, sobald die Kommunikation zwischen dem Betriebs- und Wartungszentrum OMC und der Basisstationssteuerung BSC jeweils wieder hergestellt ist.

Zusätzlich verwaltet jede Basisstationssteuerung BSC jeweils eine Tabelle aller Basisstationen BTSE und aller Transcodierund Ratenanpaßeinrichtungen TRAU, die nicht den aktuellen Stand des BTSE-Tabellenteils beziehungsweise des TRAU-Tabellenteils der LMT-Zugriffstabelle TB haben. Die aktuelle LMT-Zugriffstabelle TB beziehungsweise der BTSE-Tabellenteil oder der TRAU-Tabellenteil wird an diese BTSE-Instanzen von Basisstationen beziehungsweise TRAU-Instanzen von Transcodier- und Ratenanpaßeinrichtungen automatisch übertragen, sobald die Kommunikation über die Abis- beziehungsweise die Asub-Schnittstelle wieder hergestellt ist.

In dem beschriebenen Ausführungsbeispiel eines Betriebs- und Wartungssystems ist zusätzlich ein Notfallbetrieb vorgesehen, bei dem sicherheitsrelevante Daten für LMT-Zugriffe auch bei Betrieb des Netzes ohne Betriebs- und Wartungszentrum OMC beschränkt auf einen Basisstationssubsystembereich möglich ist. Diese Änderungen können hierbei durch den Sicherheitsbediener über eine LMT-Wartungseinrichtung LMT, die an eine Basisstationssteuerung BSC angeschlossen ist, geändert werden.

Hierzu enthält der in der Basisstationssteuerung BSC gespeicherte Teil der LMT-Zugriffstabelle TB einen für den Sicherheitsbediener speziellen Bedienerdatensatz. Nachdem sich der Sicherheitsbediener mit einem in diesem speziellen Bedienerdatensatz enthaltenen Passwort angemeldet hat, kann er auf alle in der Basisstationssteuerung BSC gespeicherten Tabellenteile der LMT-Zugriffstabelle TB zugreifen und einzelne Bedienerdatensätze verändern. Daraufhin werden geänderte LMT-Zugriffstabellen TB beziehungsweise BTSE-Tabellenteile und TRAU-Tabellenteile an alle angeschlossenen Basisstationen BTSE und Transcodier- und Ratenanpaßeinrichtungen TRAU gesendet und dort aktualisiert gespeichert. Der Sicherheitsbediener muß die geänderte LMT-Zugriffstabelle TB auch im Betriebs- und Wartungszentrum OMC eingeben, so daß eine automatische Aktualisierung im gesamten Mobilfunknetz stattfinden kann, sobald das Betriebs- und Wartungszentrum OMC wieder betriebsbereit ist.

## Patentansprüche

1. Betriebs- und Wartungssystem für ein Mobilfunknetz, bei dem eine Netzkonfiguration zentral von einer Wartungseinrichtung (OMT) eines Betriebs- und Wartungszentrums (OMC) durchführbar ist, sowie peripher mit Hilfe einer LMT-Wartungseinrichtung (LMT, LMTr), die an eine Netzeinrichtung (BSC, BTSE, TRAU) eines Basisstationssubsystems des Mobilfunknetzes angeschlossen sein kann, **gekennzeichnet durch** eine im Betriebs- und Wartungszentrum (OMC) gespeicherte LMT-Zugriffstabelle (TB), die für jeden zum Zugriff auf das Betriebs- und Wartungssystem mit Hilfe einer LMT-Wartungseinrichtung (LTM, LMTr) berechtigten Bediener einen Bedienerdatensatz mit Namensangabe, ein von ihm zum Zugriff über eine LMT-Wartungseinrichtung (LMT, LTMr) zu benutzendes, spezifisches Bedienerpasswort (Passwort) und Information über den Umfang seiner Zugriffsberechtigung enthält, **durch** eine Steuerung im Betriebs- und Wartungszentrum (OMC) zum Verwalten der LMT-Zugriffstabelle (TB) und zum Veranlassen des nichtflüchtigen Speicherns jeweils mindestens des Teiles der LMT-Zugriffstabelle (TB) in Netzeinrichtungen (BSC, BTSE, TRAU) des Basisstationssubsystems, der für einen Zugriff mit Hilfe einer LMT-Wartungseinrichtung (LMT, LMTr) über diese Netzeinrichtungen (BSC, BTSE, TRAU) erforderlich ist.

2. Betriebs- und Wartungssystem nach Anspruch 1, **dadurch gekennzeichnet, daß** die im Betriebs- und Wartungszentrum (OMC) gespeicherte LMT-Zugriffstabelle (TB) einen BSC-Tabellenteil mit Bedienerdatensätzen für LMT-Zugriffe über Basisstationssteuerungen (BSC) enthält, einen BTSE-Tabellenteil mit Bedienerdatensätzen für LMT-Zugriffe über Basisstationen (BTSE) und einen TRAU-Tabellenteil mit Bedienerdatensätzen für LMT-Zugriffe über Transcodier- und Ratenanpaßeinrichtungen (TRAU).

3. Betriebs- und Wartungssystem nach Anspruch 2, **dadurch gekennzeichnet, daß** die Steuerung im Betriebs- und Wartungszentrum (OMC) das nichtflüchtige Speichern des BSC-Tabellenteils der LMT-Zugriffstabelle (TB) in Basisstationssteuerungen (BSC) des Basisstationssubsystems veranlaßt, das nichtflüchtige Speichern des BTSE-Tabellenteils der LMT-Zugriffstabelle in Basisstationen (BTSE) und das nichtflüchtige Speichern des TRAU-Tabellenteils der LMT-Zugriffstabelle in Transcodier- und Ratenanpaßeinrichtungen (TRAU).

4. Betriebs- und Wartungssystem nach Anspruch 3, **dadurch gekennzeichnet, daß** die Steuerung im Betriebs- und Wartungszentrum (OMC) außerdem das nichtflüchtige Speichern des BTSE-Tabellenteils und des TRAU-Tabellenteils der LMT-Zugriffstabelle in Basisstationssteuerungen (BSC) des Basisstationssubsystems veranlaßt.

5. Betriebs- und Wartungssystem nach einem der vorhergehenden Ansprüche, **dadurch gekennzeichnet, daß** das Bedienerpasswort (Passwort) jeweils verschlüsselt in der LMT-Zugriffstabelle (TB) gespeichert ist.

6. Betriebs- und Wartungssystem nach Anspruch 5, **dadurch gekennzeichnet, daß** eine Netzeinrichtung (BSC, BTSE, TRAU), über die ein Zugriff mit Hilfe einer LMT-Wartungseinrichtung möglich ist, eine Steuerung zum Verschlüsseln eines von einem Bediener unverschlüsselt eingegebenen Bedienerpasswortes (Passwort) enthält und zum Vergleichen des Verschlüsselungsergebnisses mit dem verschlüsselt in der LMT-Zugriffstabelle gespeicherten Bedienerpasswort.

7. Betriebs- und Wartungssystem nach Anspruch 5 oder 6, **dadurch gekennzeichnet, daß** die Steuerung im Betriebsund Wartungszentrum (OMC) zum Generieren verschlüsselter, in der LMT-Zugriffstabelle zu speichernder Bedienerpasswörter vorgesehen ist, durch Bilden der Hash-Funktion aus einer Geheiminformation, aus dem im Klartext eingegebenen Bedienerpasswort (Passwort) und aus einer den Namen des Bedieners enthaltenden Identitätsinformation (UserID).

8. Betriebs- und Wartungssystem nach Anspruch 5 oder 6, **dadurch gekennzeichnet, daß** die Steuerung im Betriebsund Wartungszentrum (OMC) zum Generieren verschlüsselter, in netzeinrichtungstypspezifischen Tabellenteilen wie z.B. BSC-Tabellenteil, BTSE-Tabellenteil und TRAU-Tabellenteil der LMT-Zugriffstabelle (TB) zu speichernder Bedienerpasswörter vorgesehen ist, durch Bilden der Hash-Funktion aus einer für den jeweiligen Netzeinrichtungstyp spezifischen Geheiminformation, aus dem im Klartext eingegebenen Bedienerpasswort (Passwort) und aus einer den Namen des Bedieners enthaltenden Identitätsinformation (UserID).

9. Betriebs- und Wartungssystem nach Anspruch 6 und 8, **dadurch gekennzeichnet, daß** die Steuerung der Netzeinrichtung (BSC, BTSE, TRAU) vorgesehen ist, um ein im Klartext eingegebenes Bedienerpasswort (Passwort) durch Bilden der Hash-Funktion aus einer für den Netzeinrichtungstyp spezifischen Geheiminformation, aus dem im Klartext eingegebenen Bedienerpasswort (Passwort) und aus einer den Namen des Bedieners enthaltenden Identitätsinformation (UserID) zu verschlüsseln.

10. Betriebs- und Wartungssystem nach einem der vorhergehenden Ansprüche, **dadurch gekennzeichnet, daß** jede Netzeinrichtung (BSC, BTSE, TRAU) einen Speicher mit einem Installationspasswort enthält und mit Information über den Umfang der Zugriffsberechtigung, die einem Bediener die Eingabe von für die Inbetriebnahme der Netzeinrichtung erforderlichen Konfigurationskommandos erlaubt.

11. Betriebs- und Wartungssystem nach einem der vorhergehenden Ansprüche, **gekennzeichnet durch** eine Steuerung im Betriebs- und Wartungszentrum (OMC) zum Verwalten einer Tabelle aller Basisstationssteuerungen (BSC), in denen seit einem **durch** eine Aktualisierung bedingten Veranlassen des nichtflüchtigen Speicherns mindestens eines Teiles der LMT-Zugriffstabelle (TB) ein entsprechender Speichervorgang aufgrund einer Störung nicht ausgeführt worden ist, und zum Veranlassen dieses Speichervorgangs, wenn der Wegfall der Störung erkannt ist.

12. Betriebs- und Wartungssystem nach Anspruch 11, **gekennzeichnet durch** eine Steuerung in Basisstationssteuerungen (BSC) zum jeweiligen Verwalten einer Tabelle aller ihr zugeordneten Basisstationen (BTSE) und Transcodier- und Ratenanpaßeinrichtungen (TRAU), in denen seit einem **durch** eine Aktualisierung bedingten Veranlassen des nichtflüchtigen Speicherns mindestens eines Teiles der LMT-Zugriffstabelle (TB) ein entsprechender Speichervorgang aufgrund einer Störung nicht ausgeführt worden ist, und zum Veranlassen dieses Speichervorgangs, wenn der Wegfall der Störung erkannt ist.

13. Betriebs- und Wartungssystem nach einem der vorhergehenden Ansprüche, **dadurch gekennzeichnet, daß** mindestens der in einer Basisstationssteuerung gespeicherte Teil einer LMT-Zugriffstabelle (TB) einen speziellen Sicherheits-Bedienerdatensatz mit einem von einem Sicherheits-Bediener zum Zugriff über eine LMT-Wartungseinrichtung (LMT, LMTr) zu benutzenden, spezifischen Sicherheitspasswort und Information über den Umfang einer Zugriffsberechtigung enthält, um einen Zugriff auf Bedienerdatensätze der LMT-Zugriffstabelle (TB) innerhalb eines Basisstationssubsystems auch bei Netzbetrieb ohne Betriebs- und Wartungszentrum (OMC) zu ermöglichen.

14. Betriebs- und Wartungssystem nach einem der vorhergehenden Ansprüche, **gekennzeichnet durch** eine Steuerung in einer Netzeinrichtung (BSC, BTSE, TRAU), über die mit Hilfe einer LMT-Wartungseinrichtung (LMT, LMTr) von einem Bediener sein Bedienerpasswort geändert worden ist, zum Verhindern eines Zugriffes mit dem geänderten Bedienerpasswort, bis das nichtflüchtige Speichern des geänderten Bedienerpasswortes in der LMT-Zugriffstabelle (TB) der Netzeinrichtung (BSC, BTSE, TRAU) auf Veranlassung des Betriebs- und Wartungszentrums (OMC) erfolgt ist.

15. Betriebs- und Wartungssystem nach einem der vorhergehenden Ansprüche, **gekennzeichnet durch** eine Steuerung in einer Netzeinrichtung (BSC, BTSE, TRAU), über die mit Hilfe einer in einem Basisstationssteuerungs-Fernsteuermodus betriebenen LMT-Wartungseinrichtung (LMTr) von einem Bediener unter Eingabe seines Bedienerpasswortes (Passwort) konfigurierend zugegriffen wird, um das von der LMT-Wartungseinrichtung (LMTr) in Klartext empfangene Bedienerpasswort (Passwort) zu verschlüsseln und verschlüsselt zur Basisstationssteuerung (BSC) zu übermitteln.

16. Betriebs- und Wartungssystem nach einem der vorhergehenden Ansprüche, **dadurch gekennzeichnet, daß** die Information über den Umfang der Zugriffsberechtigung jedes Bedieners in Form einer Berechtigungsprofil-Referenz gespeichert ist, mit von einem Sicherheits-Bediener einzeln festgelegten Berechtigungen von Zugriffsarten auf einzelne Klassen gemanagter Objekte.

17. Betriebs- und Wartungssystem nach einem der vorhergehenden Ansprüche, **dadurch gekennzeichnet, daß** der Bedienerdatensatz von zum Zugriff auf das Betriebs- und Wartungssystem mit Hilfe einer LMT-Wartungseinrichtung (LMT, LMTr) berechtigten Bedienern der im Betriebs- und Wartungszentrum gespeicherten LMT-Zugriffstabelle (TB) jeweils eine Gültigkeitsdatumsangabe enthält.

18. Betriebs- und Wartungssystem nach einem der vorhergehenden Ansprüche, **dadurch gekennzeichnet, daß** der Bedienerdatensatz von zum Zugriff auf das Betriebs- und Wartungssystem mit Hilfe einer LMT-Wartungseinrichtung (LMT, LMTr) berechtigten Bedienern der im Betriebs- und Wartungszentrum (OMC) gespeicherten LMT-Zugriffstabelle (TB) jeweils eine Information enthält, ob der Bediener sein Bedienerpasswort mit Hilfe einer an eine Netzeinrichtung (BSC, BTSE, TRAU) eines Basisstationssubsystems des Mobilfunknetzes angeschlossen LMT-Wartungseinrichtung (LMT, LMTr)ändern darf.

19. Betriebs- und Wartungssystem nach einem der vorhergehenden Ansprüche, **dadurch gekennzeichnet, daß** der Bedienerdatensatz von zum Zugriff auf das Betriebs- und Wartungssystem mit Hilfe einer LMT-Wartungseinrichtung (LMT, LMTr) berechtigten Bedienern der im Betriebs- und Wartungszentrum (OMC) gespeicherten LMT-Zugriffstabelle (TB) jeweils eine Information enthält, für welche Typen von Netzeinrichtungen (BSC, BTSE, TRAU) der Bediener zugriffsberechtigt ist.

20. Betriebs- und Wartungssystem nach Anspruch 19, **dadurch gekennzeichnet, daß** der Bedienerdatensatz von zum Zugriff auf das Betriebs- und Wartungssystem mit Hilfe einer LMT-Wartungseinrichtung (LMT, LMTr) berechtigten Bedienern jeweils eine Information enthält, für welche physikalischen Einrichtungen der Typen von Netzeinrichtungen (BSC, BTSE, TRAU) der Bediener jeweils zugriffsberechtigt ist.

## Claims

1. Operation and maintenance system for a mobile telecommunications network in which a network configuration can be executed centrally from a maintenance device (OMT) of an operation and maintenance centre (OMC) and peripherally with the aid of an LMT maintenance device (LMT, LMTr) which can be connected to a network device (BSC, BTSE, TRAU) of a base station subsystem of the mobile telecommunications network, **characterized by** an LMT access table (TB), which is stored in the operation and maintenance centre (OMC) and which contains for each operator authorized for access to the operation and maintenance system with the aid of an LMT maintenance device (LTM, LMTr) an operator record with a name entry, a specific operator password (password) to be used by him for access via an LMT maintenance device (LMT, LMTr), and information on the extent of his access authorization, by a controller in the operation and maintenance centre (OMC) for administering the LMT access table (TB) and for initiating the non-volatile storage of in each case at least that part of the LMT access table (TB) in network devices (BSC, BTSE, TRAU) of the base station subsystem which is required for an access with the aid of an LMT maintenance device (LMT, LMTr) via these network devices (BSC, BTSE, TRAU).

2. Operation and maintenance system according to Claim 1, **characterized in that** the LMT access table (TB) stored in the operation and maintenance centre (OMC) contains a BSC table part with operator records for LMT accesses via base station controllers (BSC), a BTSE table part with operator records for LMT accesses via base stations (BTSE) and a TRAU table part with operator records for LMT accesses via transcoder and rate adapter units (TRAU).

3. Operation and maintenance system according to Claim 2, **characterized in that** the controller in the operation and maintenance centre (OMC) initiates the non-volatile storage of the BSC table part of the LMT access table (TB) in base station controllers (BSC) of the base station subsystem, the non-volatile storage of the BTSE table part of the LMT access table in base stations (BTSE) and the non-volatile storage of the TRAU table part of the LMT access table in transcoder and rate adapter units (TRAU).

4. Operation and maintenance system according to Claim 3, **characterized in that** the controller in the operation and maintenance centre (OMC) also initiates the non-volatile storage of the BTSE table part and the TRAU table part of the LMT access table in base station controllers (BSC) of the base station subsystem.

5. Operation and maintenance system according to one of the preceding claims, **characterized in that** the operator password (password) is in each case stored in encrypted form in the LMT access table (TB).

6. Operation and maintenance system according to Claim 5, **characterized in that** a network device (BSC, BTSE, TRAU), via which an access is possible with the aid of an LMT maintenance device, contains a controller for encrypting an operator password (password) entered in unencrypted form by an operator, and for comparing the result of the encryption with the operator password stored in encrypted form in the LMT access table.

7. Operation and maintenance system according to Claim 5 or 6, **characterized in that** the controller in the operation and maintenance centre (OMC) is provided for generating encrypted operator passwords to be stored in the LMT access table by forming the hash function from a secret information item, from the operator password (password) entered in plain text and from an identity information item (UserID) containing the name of the operator.

8. Operation and maintenance system according to Claim 5 or 6, **characterized in that** the controller in the operation and maintenance centre (OMC) is provided for generating encrypted operator passwords to be stored in network device type-specific table parts such as, e.g. BSC table part, BTSE table part and TRAU table part of the LMT access table (TB) by forming the hash function from a secret information item specific to the respective network device type, from the operator password (password) entered in plain text and from an identity information item (UserID) containing the name of the operator.

9. Operation and maintenance system according to Claim 6 and 8, **characterized in that** the controller of the network device (BSC, BTSE, TRAU) is provided for encrypting an operator password (password) entered in plain text by forming the hash function from a secret information item specific to the network device type, from the operator password (password) entered in plain text and from an identity information item (UserID) containing the name of the operator.

10. Operation and maintenance system according to one of the preceding claims, **characterized in that** each network device (BSC, BTSE, TRAU) contains a store containing an installation password and containing information on the extent of the access authorization which allows an operator to input configuration commands required for putting the network device into operation.

11. Operation and maintenance system according to one of the preceding claims, **characterized by** a controller in the operation and maintenance centre (OMC) for administering a table of all base station controllers (BSC) in which, since an initiation, necessary due to an update, of the non-volatile storage of at least part of the LMT access table (TB), a corresponding storage process has not been performed due to a disturbance and for initiating this storage process if the disappearance of the disturbance has been recognized.

12. Operation and maintenance system according to Claim 11, **characterized by** a controller in the base station controllers (BSC) for the respective administration of a table of all base stations (BTSE) and transcoder and rate adapter units (TRAU) allocated to it, in which, since an initiation, necessary due to an update, of the non-volatile storage of at least part of the LMT access table (TB), a corresponding storage process has not been performed due to a disturbance, and for initiating this storage process if the disappearance of the disturbance has been recognized.

13. Operation and maintenance system according to one of the preceding claims, **characterized in that** at least the part of an LMT access table (TB) stored in a base station controller contains a special security operator record containing a specific security password, to be used by a security operator for access via an LMT maintenance device (LMT, LMTr), and information on the extent of an access authorization in order to enable operator records of the LMT access table (TB) within a base station subsystem to be accessed even in the case of a network operation without an operation and maintenance centre (OMC).

14. Operation and maintenance system according to one of the preceding claims, **characterized by** a controller in a network device (BSC, BTSE, TRAU), via which an operator has changed his operator password with the aid of an LMT maintenance device (LMT, LMTr), for preventing access by means of the changed operator password until the non-volatile storage of the changed operator password in the LMT access table (TB) of the network device (BSC, BTSE, TRAU) has taken place on initiation by the operation and maintenance centre (OMC).

15. Operation and maintenance system according to one of the preceding claims, **characterized by** a controller in a network device (BSC, BTSE, TRAU), via which an operator is accessing in a configuring manner by inputting his operator password (password) with the aid of an LMT maintenance device (LMTr) operated in a base station controller remote mode in order to encrypt the operator password (password) received in plain text from the LMT maintenance device (LMTr) and to transfer this password in encrypted form to the base station controller (BSC).

16. Operation and maintenance system according to one of the preceding claims, **characterized in that** the information on the extent of the access authorization of each operator is stored in the form of an authorization profile reference containing authorizations, defined individually by a security operator, of types of access to individual classes of managed objects.

17. Operation and maintenance system according to one of the preceding claims, **characterized in that** the operator record of operators, authorized for access to the operation and maintenance system with the aid of an LMT maintenance device (LMT, LMTr), of the LMT access table (TB) stored in the operation and maintenance centre in each case contains a validity data information item.

18. Operation and maintenance system according to one of the preceding claims, **characterized in that** the operator record of operators, authorized for access to the operation and maintenance system with the aid of an LMT maintenance device (LMT, LMTr), of the LMT access table (TB) stored in the operation and maintenance centre (OMC) in each case contains an information item on whether the operator is allowed to change his operator password with the aid of an LMT maintenance device (LMT, LMTr) connected to a network device (BSC, BTSE, TRAU) of a base station subsystem of the mobile telecommunications network.

19. Operation and maintenance system according to one of the preceding claims, **characterized in that** the operator record of operators, authorized for access to the operation and maintenance system with the aid of an LMT maintenance device (LMT, LMTr), of the LMT access table (TB) stored in the operation and maintenance centre (OMC) in each case contains an information item on the types of network devices (BSC, BTSE, TRAU) for which the operator has access authorization.

20. Operation and maintenance system according to Claim 19, **characterized in that** the operator record of operators authorized for access to the operation and maintenance system with the aid of an LMT maintenance device (LMT, LMTr) in each case contains an information item on the physical devices of the types of network devices (BSC, BTSE, TRAU) for which the operator in each case has access authorization.

## Revendications

1. Système d'exploitation et de maintenance pour un réseau radio mobile, dans lequel une configuration de réseau peut être effectuée centralement par un dispositif de maintenance (OMT) d'un centre d'exploitation et de maintenance (OMC) ainsi que périphériquement à l'aide d'un dispositif de maintenance LMT (LMT, LMTr) pouvant être connecté à un dispositif réseau (BSC, BTSE, TRAU) d'un sous-système radio du réseau radio mobile, **caractérisé par** un tableau (TB) d'accès LMT enregistré dans un centre d'exploitation et de maintenance (OMC), ledit tableau contenant, pour chaque opérateur autorisé à accéder au système d'exploitation et de maintenance à l'aide d'un dispositif de maintenance LMT (LMT, LMTr), un jeu de données opérateur avec indication du nom, un mot de passe opérateur (mot de passe) spécifique qu'il doit utiliser pour l'accès via un dispositif de maintenance LMT (LMT, LMTr) et une information sur l'étendue de son droit d'accès, par une commande située dans le centre d'exploitation et de maintenance (OMC) pour gérer le tableau (TB) d'accès LMT et pour provoquer l'enregistrement non volatil, dans des dispositifs réseau (BSC, BTSE, TRAU) du sous-système radio, dans chaque cas d'au moins la partie du tableau (TB) d'accès LMT qui est nécessaire aux fins d'un accès à l'aide d'un dispositif de maintenance LMT (LMT, LMTr) par l'intermédiaires desdits dispositifs réseau (BSC, BTSE, TRAU).

2. Système d'exploitation et de maintenance selon la revendication 1, **caractérisé en ce que** le tableau (TB) d'accès LMT enregistré dans le centre d'exploitation et de maintenance (OMC) comprend une partie de tableau BSC avec jeux de données opérateur pour accès LMT par l'intermédiaire de contrôleurs de stations de base (BSC), une partie de tableau BTSE avec jeux de données opérateur pour accès LMT via des stations de base (BTSE) et une partie de tableau TRAU avec jeux de données opérateur pour accès LMT via des dispositifs de transcodage et d'adaptation de débit (TRAU).

3. Système d'exploitation et de maintenance selon la revendication 2, **caractérisé en ce que** la commande située dans le centre d'exploitation et de maintenance (OMC) provoque l'enregistrement non volatil de la parte de tableau BSC du tableau (TB) d'accès LMT dans des contrôleurs de stations de base (BSC) du sous-système radio ainsi que l'enregistrement non volatil de la partie de tableau BTSE du tableau d'accès LMT dans des stations de base (BTSE) et l'enregistrement non volatil de la partie de tableau TRAU du tableau d'accès LMT dans des dispositifs de transcodage et d'adaptation (TRAU).

4. Système d'exploitation et de maintenance selon la revendication 3, **caractérisé en ce que** la commande située dans le centre d'exploitation et de maintenance (OMC) provoque en outre l'enregistrement non volatil de la partie de tableau BTSE et de la partie de tableau TRAU du tableau d'accès LMT dans des contrôleurs de stations de base (BSC) du sous-système radio.

5. Système d'exploitation et de maintenance selon l'une des revendications précédentes, **caractérisé en ce que** le mot de passe opérateur (mot de passe) est codé et enregistré dans le tableau (TB) d'accès LMT dans chaque cas.

6. Système d'exploitation et de maintenance selon la revendication 5, **caractérisé en ce qu'**un dispositif réseau (BSC, BTSE, TRAU) par l'intermédiaire duquel un accès est possible à l'aide d'un dispositif de maintenance LMT contient une commande pour le codage d'un mot de passe opérateur (mot de passe) introduit par un opérateur sous une forme non codée et pour la comparaison du résultat du codage avec le mot de passe opérateur enregistré sous une forme codée dans le tableau d'accès LMT.

7. Système d'exploitation et de maintenance selon la revendication 5 ou 6, **caractérisé en ce que** la commande située dans le centre d'exploitation et de maintenance (OMC) est prévue pour générer des: mots de passe opérateur codés à enregistrer dans le tableau d'accès LMT par formation de la fonction de hash au départ d'une information secrète, du mot de passe opérateur (mot de passe) introduit en texte clair et d'une information d'identité (UserID) contenant le nom de l'opérateur.

8. Système d'exploitation et de maintenance selon la revendication 5 ou 6, **caractérisé en ce que** la commande située dans le centre d'exploitation et de maintenance (OMC) est prévue pour générer des mots de passe opérateur codés à enregistrer dans des parties de tableau spécifiques aux dispositifs réseau, telles que, par exemple, la partie de tableau BSC, la partie de tableau BTSE et la partie de tableau TRAU du tableau (TB) d'accès LMT par formation de la fonction de hash au départ d'une information secrète spécifique au type de dispositif réseau, du mot de passe opérateur (mot de passe) introduit en texte clair et d'une information d'identité (UserID) contenant le nom de l'opérateur.

9. Système d'exploitation et de maintenance selon les revendications 6 et 8, **caractérisé en ce que** la commande du dispositif réseau (BSC, BTSE, TRAU) est prévue pour coder un mot de passe opérateur (mot de passe) introduit en texte clair par formation de la fonction de hash au départ d'une information secrète spécifique au type de dispositif réseau, du mot de passe opérateur (mot de passe) introduit en texte clair et d'une information d'identité (UserID) contenant le nom de l'opérateur

10. Système d'exploitation et de maintenance selon l'une des revendications précédentes, **caractérisé en ce que** chaque dispositif réseau (BSC, BTSE, TRAU) comprend une mémoire avec un mot de passe d'installation ainsi qu'avec une information sur l'étendue du droit d'accès permettant à un opérateur d'entrer les commandes de configuration nécessaires pour la mise en service du dispositif réseau.

11. Système d'exploitation et de maintenance selon l'une des revendications précédentes, **caractérisé en ce qu'**une commande située dans le centre d'exploitation et de maintenance (OMC) pour gérer un tableau de tous les contrôleurs de stations de base (BSC) dans lesquels une perturbation a eu pour effet que, depuis que l'enregistrement non volatil d'au moins une partie du tableau (TB) d'accès LMT a été provoqué suite à une actualisation, une opération d'enregistrement correspondante n'a pas été exécutée, et pour provoquer ladite opération d'enregistrement lorsque la suppression de la perturbation a été reconnue.

12. Système d'exploitation et de maintenance selon la revendication 11, **caractérisé en ce qu'**une commande située dans des contrôleurs de stations de base (BSC) pour gérer dans chaque cas un tableau de toutes les stations de base (BTSE) et de tous les dispositifs de transcodage et d'adaptation de débit (TRAU) qui lui sont associés et dans lesquels une perturbation a eu pour effet que, depuis que l'enregistrement non volatil d'au moins une partie du tableau (TB) d'accès LMT a été provoqué suite à une actualisation, une opération d'enregistrement correspondante n'a pas été exécutée, et pour provoquer ladite opération d'enregistrement lorsque la suppression de la perturbation a été reconnue.

13. Système d'exploitation et de maintenance selon l'une des revendications précédentes, **caractérisé en ce qu'**au moins la partie d'un tableau (TB) d'accès LMT enregistrée dans un contrôleur de stations de base contient un jeu de données spécial opérateur de sécurité avec un mot de passe de sécurité spécifique qu'un opérateur de sécurité doit utiliser pour un accès par l'intermédiaire d'un dispositif de maintenance LMT (LMT, LMTr) et une information sur l'étendue d'un droit d'accès pour permettre un accès à des jeux de données opérateur du tableau (TB) d'accès LMT dans un sous-système radio y compris lorsque le réseau fonctionne sans centre d'exploitation et de maintenance (OMC).

14. Système d'exploitation et de maintenance selon l'une des revendications précédentes, **caractérisé par** une commande située dans un dispositif réseau (BSC, BTSE, TRAU), par l'intermédiaire duquel un opérateur a modifié son mot de passe opérateur à l'aide d'un dispositif de maintenance LMT (LMT, LMTr), pour empêcher un accès à l'aide du mot de passe opérateur modifié jusqu'à ce que le centre d'exploitation et de maintenance (OMC) ait provoqué l'enregistrement non volatil du mot de passe opérateur modifié dans le tableau (TB) d'accès LMT du dispositif réseau (BSC, BTSE, TRAU).

15. Système d'exploitation et de maintenance selon l'une des revendications précédentes, **caractérisé par** une commande située dans un dispositif réseau (BSC, BTSE, TRAU), par l'intermédiaire duquel un opérateur procède à un accès à des fins de configuration en introduisant son mot de passe opérateur et à l'aide d'un dispositif de maintenance LMT (LMTr) exploité en mode de télécommande du contrôleur de stations de base, pour coder le mot de passe opérateur (mot de passe) reçu en texte clair par le dispositif de maintenance LMT (LMTr) et pour le transmettre sous une forme codée au contrôleur de stations de base (BSC).

16. Système d'exploitation et de maintenance selon l'une des revendications précédentes, **caractérisé en ce que** l'information sur l'étendue du droit d'accès de chaque opérateur est enregistrée sous la forme d'une référence de profil d'autorisation, avec des autorisations de natures d'accès à des classes distinctes d'objets gérés, lesdites autorisations étant déterminées séparément par un opérateur de sécurité.

17. Système d'exploitation et de maintenance selon l'une des revendications précédentes, **caractérisé en ce que** chaque jeu de données opérateur d'opérateurs du tableau (TB) d'accès LMT enregistré dans le centre d'exploitation et de maintenance, lesquels sont autorisés à accéder au système d'exploitation et de maintenance à l'aide d'un dispositif de maintenance LMT (LMT, LMTr), contient une indication sur la date de validité.

18. Système d'exploitation et de maintenance selon l'une des revendications précédentes, **caractérisé en ce que** chaque jeu de données opérateur d'opérateurs du tableau (TB) d'accès LMT enregistré dans le centre d'exploitation et de maintenance (OMC), lesquels sont autorisés à accéder au système d'exploitation et de maintenance à l'aide d'un dispositif de maintenance LMT (LMT, LMTr), contient une information disant si l'opérateur est autorisé à modifier son mot de passe opérateur à l'aide d'un dispositif de maintenance LMT (LMT, LMTr) connecté à un dispositif réseau (BSC, BTSE, TRAU) d'un sous-système radio du réseau radio mobile.

19. Système d'exploitation et de maintenance selon l'une des revendications précédentes, **caractérisé en ce que** chaque jeu de données opérateur d'opérateurs du tableau (TB) d'accès LMT enregistré dans le centre d'exploitation et de maintenance (OMC), lesquels sont autorisés à accéder au système d'exploitation et de maintenance à l'aide d'un dispositif de maintenance LMT (LMT, LMTr), contient une information disant pour quels types de dispositifs réseau (BSC, BISE, TRAU) l'opérateur est autorisé d'accès.

20. Système d'exploitation et de maintenance selon la revendication 19, **caractérisé en ce que** chaque jeu de données opérateur d'opérateurs autorisés à accéder au système d'exploitation et de maintenance à l'aide d'un dispositif de maintenance LMT (LMT, LMTr), contient une information disant pour quels dispositifs physiques des types de dispositifs réseau (BSC, BTSE, TRAU) l'opérateur est autorisé d'accès dans chaque cas.
